# EUROPEAN PATENT SPECIFICATION

(11) **EP 3 823 075 B1**
(45) Date of publication and mention of the grant of the patent: **30.04.2025**
(21) Application number: 19835000.1
(22) Date of filing: 11.07.2019
(51) Int. Cl.: H01M 10/0585, H01M 4/139, H01M 4/66, H01M 10/0562

(54) **INSTALLATION FOR MANUFACTURING ALL-SOLID SECONDARY BATTERY AND METHOD FOR THE MANUFACTURE OF SUCH A BATTERY**
ANLAGE ZUR HERSTELLUNG EINER FESTKÖRPERSEKUNDÄRBATTERIE UND VERFAHREN ZUR HERSTELLUNG EINER SOLCHEN BATTERIE
INSTALLATION DE FABRICATION DE BATTERIES RECHARGEABLES TOUT SOLIDE ET PROCÉDÉ POUR LA FABRICATION DES BATTERIES

(30) Priority: 13.07.2018 JP 2018132774
(43) Date of publication of application: 19.05.2021
(73) Proprietor: Kanadevia Corporation, Osaka-shi, Osaka 559-8559 (JP)
(72) Inventor: SUGIYO, Takeshi, Osaka-shi, Osaka 559-8559 (JP); OKAMOTO, Kenji, Osaka-shi, Osaka 559-8559 (JP); FUKUI, Hideyuki, Osaka-shi, Osaka 559-8559 (JP)
(74) Representative: Canzler & Bergmeier Patentanwälte Partnerschaft mbB
(86) International application number: PCT/JP2019/027585
(87) International publication number: WO 2020/013295

(56) References cited:
- EP-A1- 3 316 382
- WO-A1-2017/150354
- WO-A1-2017/187494
- WO-A1-2018/110688
- WO-A1-2018/116983
- JP-A- 2013 161 529
- JP-A- 2015 069 810
- JP-A- 2015 095 281
- US-A1- 2012 115 018

## Description

### Technical Field

The present invention relates to an installation for manufacturing an all-solid secondary battery as well as a manufacturing method of such battery.

### Background Art

All-solid secondary batteries are known as safe secondary batteries because flammable organic solvents are not necessary. Instead of a flammable organic solvent, an all-solid secondary battery is mainly composed of a powder laminate made of a powder material. Thus, an all-solid secondary battery improves safety but suffers from problems that stem from a powder material.

One of the problems is the mixing of the power materials of adjacent layers in the powder laminate during the formation of the powder laminate. In order to solve the problem, a method of forming a layer on a dry layer to avoid mixing powder materials is proposed, the layer being formed by spraying slurry having the material of the layer onto the dry layer. Such a method is disclosed in, for example, JP 2012 252833 A.

JP 2013 161529 A discloses a device for manufacturing a solid secondary battery, wherein a dispersion liquid is sprayed electrostatically an a substrate, by which time the liquid portion is evaporated, to produce a solid electrolyte layer.

WO 2017/187494 A1 discloses an apparatus for making solid secondary batteries by electrostatic screen printing in which mixed powders for the first and second electrodes are mixed having different mixtures prior to electrostatic deposition and pressed under pressure. No further details regarding the state of the powders or any further processing after the pressing step are provided.

US 2012/115018 A1 discloses an apparatus for making solid secondary lithium batteries using solid electrolyte, especially sulfide based, which has reduced short circuiting, by stacking a positive electrode material powder, an electrolyte material powder and a negative electrode material powder in sequence. The powders are mixed and may be electrostatic-screen deposited.

### Summary of Invention

### Technical Problem

In the method of JP 2012 252833 A, a wet process is used with slurry prepared by dissolving a powder material in a solvent. In a method of a wet process, impurities such as a solvent remain in a powder laminate unless the impurities are completely removed from the powder laminate. Moreover, a part from which impurities have been removed may be left as a cavity in the powder laminate. Such impurities and cavity do not act as batteries and thus impurities and/or a cavity remaining in the powder laminate may deteriorate battery performance in an all-solid secondary battery including the powder laminate.

An object of the present invention is to provide an installation for manufacturing an all-solid secondary battery so as to improve the performance of the battery. It is a further object to provide a respective manufacturing method.

### Solution to Problem

In order to solve the problem, an installation for manufacturing an all-solid secondary battery according to claim 1 is provided.

Advantageously, the powder laminate includes a positive layer, a solid-electrolyte layer, and a negative layer, and the electrostatic film-forming device includes a positive-electrode electrostatic film-forming machine for forming the positive layer, an electrolyte electrostatic film-forming machine for forming the solid-electrolyte layer, and a negative-electrode electrostatic film-forming machine for forming the negative layer.

With advantage, the conveying device includes a positive-electrode conveyor for conveying the powder material for forming the positive layer to the positive-electrode electrostatic film-forming machine and a negative-electrode conveyor for conveying the powder material for forming the negative layer to the negative-electrode electrostatic film-forming machine, and
the installation further includes an electrolyte conveyor for conveying the powder material for forming the solid-electrolyte layer to the electrolyte electrostatic film-forming machine.

Additionally, the solid-electrolyte layer may be a layer made of a sulfide based solid electrolyte.

Advantageously, the electrostatic film-forming device includes a powder loading member to be loaded with the powder material and a direct-current power supply that drops, by an electrostatic force, the powder material, with which the powder loading member is loaded, and forms the powder material into the powder films.

Advantageously, targets to be pressurized by the pressure device are the powder films formed by the electrostatic film-forming device and current collectors on which the powder films are placed, the current collectors have at least rough surfaces on which the powder films are placed, and
the installation further includes a pressurizing charger/discharger for charging and discharging an electrodes body having the powder laminate interposed between the two current collectors while applying a pressure to the electrodes body.

With advantage, the cutting-removing device forms the powder laminate by cutting and removing the outer end portion of the stacked powder films, and
the powder laminate to be formed is cut by the cutting-removing device such that an interface between the negative/positive layer and the solid-electrolyte layer has a larger area than an interface between the positive/negative layer and the solid-electrolyte layer, and the powder laminate has a side inclined as a cut surface.

Advantageously, the cutting-removing device cuts the powder films while stiffness inside a cutting position of the powder films is higher than stiffness outside the cutting position.

With advantage, the cutting-removing device includes a die for holding the powder films and a punch for stamping the powder films held by the die at a speed of at most 100 mm/sec,
the die has a flank surface on an inner wall where the punch is inserted, and
the die holds the powder films so as to accept deformation of the powder films stamped by the punch.

Said above-stated problem is also solved by a method for manufacturing an all-solid secondary battery according to claim 6.

Advantageous embodiments of the invention are characterized by the features of the dependent claims.

### Advantageous Effect of Invention

According to the installation and the method for manufacturing the all-solid secondary battery, the impurities such as a solvent are not left contrary to a wet-process method and a cavity formed by removing impurities is not left in the formed powder laminate. This can improve the battery performance of the all-solid secondary battery manufactured from the powder laminate.

### Brief Description of Drawings

[FIG. 1] FIG. 1 is a cross-sectional view illustrating an all-solid secondary battery according to first and second embodiments of the present invention.
[FIG. 2] FIG. 2 is a block diagram for explaining an installation for manufacturing the all-solid secondary battery according to the first embodiment of the present invention.
[FIG. 3] FIG. 3 is a block diagram for explaining an installation for manufacturing the all-solid secondary battery according to the second embodiment of the present invention.
[FIG. 4] FIG. 4 is a schematic diagram for explaining a first specific example of an electrostatic film-forming device in the manufacturing installation.
[FIG. 5] FIG. 5 is a schematic diagram for explaining particularly a screen printing plate as a second specific example of the electrostatic film-forming device.
[FIG. 6] FIG. 6 is a schematic diagram for explaining a first specific example of a cutting-removing device in the manufacturing installation.
[FIG. 7] FIG. 7 is a schematic diagram for explaining a second specific example of the cutting-removing device in the manufacturing installation.
[FIG. 8] FIG. 8 is a schematic diagram for explaining a third specific example of the cutting-removing device in the manufacturing installation.
[FIG. 9] FIG. 9 is a schematic diagram for explaining a fourth specific example of the cutting-removing device in the manufacturing installation.
[FIG. 10] FIG. 10 is a schematic diagram for explaining a specific example of a powder-film forming step in a method of manufacturing the all-solid secondary battery.
[FIG. 11] FIG. 11 is a schematic diagram for explaining a specific example of the powder-film forming step in the method of manufacturing the all-solid secondary battery.
[FIG. 12] FIG. 12 is a schematic diagram for explaining a specific example of the powder-film forming step in the method of manufacturing the all-solid secondary battery.
[FIG. 13] FIG. 13 is a schematic diagram for explaining a specific example of the all-solid secondary battery.
[FIG. 14] FIG. 14 is a schematic diagram for explaining a specific example of the all-solid secondary battery.
[FIG. 15] FIG. 15 is a schematic diagram for explaining a specific example of the all-solid secondary battery.

### Description of Embodiments

### [First Embodiment]

An installation for manufacturing an all-solid secondary battery according to a first embodiment of the present invention will be described below in accordance with the accompanying drawings.

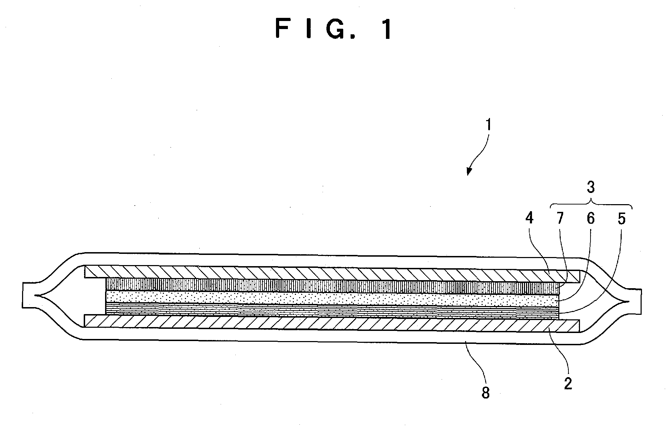

Referring to FIG. 1, the configuration of the all-solid secondary battery manufactured by the manufacturing installation will be simply described below.

As illustrated in FIG. 1, an all-solid secondary battery 1 includes a powder laminate 3 in which powder films are stacked. Specifically, the powder laminate 3 includes a positive layer 5, a negative layer 7, and a solid-electrolyte layer 6 disposed between the positive layer 5 and the negative layer 7. Each of the positive layer 5, the negative layer 7, and the solid-electrolyte layer 6 may be a single powder film or a laminate of multiple powder films. The all-solid secondary battery 1 further includes a positive current collector 2 and a negative current collector 4 that are disposed with the powder laminate 3 interposed therebetween in the thickness direction. Hereinafter, the positive current collector 2, the negative current collector 4, and the powder laminate 3 interposed between the positive current collector 2 and the negative current collector 4 will be referred to as an electrodes body 2 to **4.** The electrodes body 2 to 4 may include an insulating member, which is not illustrated, disposed between the positive current collector 2 and the negative current collector 4 and outside of the powder laminate 3. The all-solid secondary battery 1 optionally includes an outer package 8, such as a laminated pack 8 or a can, which contains the electrodes body 2 to 4. When the electrodes body 2 to 4 is contained in the outer package 8, the positive current collector 2 and the negative current collector 4 are electrically connected to the outside of the outer package 8.

The materials of the main components of the all-solid secondary battery 1 will be described below.

As the positive current collector 2 and the negative current collector 4, thin plates and foil members that are made of copper (Cu), magnesium (Mg), stainless steel, titanium (Ti), iron (Fe), cobalt (Co), nickel (Ni), zinc (Zn), aluminum (Al), germanium (Ge), indium (In), lithium (Li), tin (Sn), and an alloy thereof are used, or films made of the materials are used. The thin plates and foil members are 5 to 100 µm in thickness. Moreover, the surfaces of the positive current collector 2 and the negative current collector 4 are preferably roughened in view of improvement in adhesion to the powder laminate 3 containing powder. Roughening is processing for increasing surface roughness by etching or the like. An insulating sheet made of polymeric materials, e.g., a PET film is used as an insulating member.

The positive layer 5 and the negative layer 7 are layers made of a mixture of, with a predetermined ratio, a positive-electrode active material and a negative-electrode active material that ensure an electron conduction path among particles in order to deliver and receive electrons, and a solid electrolyte having ion conduction. The solid electrolyte having lithium-ion conduction is mixed with the positive-electrode active material and the negative-electrode active material, thereby providing ion conduction in addition to electron conduction. This can ensure the ion conduction path among particles.

The positive-electrode active material suitable for the positive layer 5 is not particularly limited as long as the material enables the insertion and desorption of lithium ions. For example, the positive-electrode active material may be selected from oxides such as a lithium-nickel composite oxide (LiNiₓM₁₋ₓO₂), lithium cobalt oxide (LiCoO₂), lithium nickel oxide (LiNiO₂), lithium-nickel-cobalt-aluminum composite oxide (LiNi_{0.8}Co_{0.15}Al_{0.05}O₂, NCA layered oxide), lithium manganese oxide (e.g., spinel-type lithium manganese oxide LiMn₂O₄), and composite oxides with excessive Li (Li₂MnO₃-LiMO₂), and compounds other than oxides. Compounds other than oxides include, for example, an olivine compound (LiMPO₄) and a sulfur-containing compound (e.g., Li₂S). In the chemical formulas, M indicates a transition metal. At least one positive-electrode active material can be used alone or in combination. In view of ease in securing a high capacity, a lithium-containing oxide containing at least one selected from the group consisting of Co, Ni, and Mn is preferable. The lithium-containing oxide may further contain typical metallic elements such as Al.

Moreover, in view of the improvement of rate characteristics, the positive-electrode active material may have an active material surface coated with a coating material. The coating material may be, for example, Li₄Ti₅O₁₂, LiTaO₃, Li₄NbO₃, LiAlO₂, Li₂ZrO₃, Li₂WO₄, Li₂TiO₃, Li₂B₄O₇, Li₃PO₄, Li₂MoO₄, LiBO₂, alumina (Al₂O₃), or carbon (C).

The negative-electrode active material suitable for the negative layer 7 is a mixture of a negative-electrode active material and a lithium-ion conductive solid electrolyte or a negative-electrode active material used alone. The negative-electrode active material is not particularly limited as long as the insertion and desorption of a lithium ion can be performed. Known negative-electrode active materials used for all-solid batteries are usable. The negative-electrode active material may be, for example, a single element, an alloy, or a compound of metals or semimetals that allow the insertion and desorption of a lithium ion in addition to a carbonaceous material that allows the insertion and desorption of a lithium ion. Examples of the carbonaceous material include graphite (e.g., natural graphite or artificial graphite), hard carbon, and amorphous carbon. A single element and an alloy of metals or semimetals may be a lithium metal, an alloy thereof, or Si as a single element. A compound may be, for example, an oxide, a sulfide, a nitride, a hydrate, or silicide (e.g., lithium silicide). For example, a titanium oxide or a silicon oxide may be used as an oxide. At least one negative-electrode active material may be used alone or in combination. For example, a silicon oxide and a carbonaceous material may be used in combination.

Solid electrolytes are roughly classified into organic polymer electrolytes (also referred to as organic solid electrolytes) and inorganic solid electrolytes. Any one of the electrolytes may be used. Inorganic solid electrolytes are roughly classified into oxide materials and sulfide materials, any one of the materials may be used. Moreover, a crystalline or amorphous inorganic solid electrolyte may be appropriately selected. In other words, a solid electrolyte can be appropriately selected from materials including an organic compound, an inorganic compound, and a mixture of the compounds. Specifically, materials usable as solid electrolytes include, for example, a lithium-ion conductive solid electrolyte and a sulfide inorganic-solid electrolyte that is known for ion conduction higher than those of other inorganic compounds. Moreover, materials usable as solid electrolytes include lithium-containing metal oxides (at least one metal) such as Li₂-SiO₂ and Li₂-SiO₂-P₂O₅, a lithium-containing metal nitride such as LiₓP_{y}O_{1-z}N₂, lithium-containing sulfide based glass such as Li₂S-P₂S₅ system, Li₂S-SiS₂ system, Li₂S-B₂S₃ system, Li₂S-GeS₂ system, Li₂S-SiS₂-Lil system, Li₂S-SiS₂-Li₃PO₄ system, Li₂S-Ge₂S₂ system, Li₂S-GeS₂-P₂S₅ system, and Li₂S-GeS₂-ZnS system, PEO (polyethylene oxide), PVDF (polyvinylidene difluoride), lithium phosphate (Li₃PO₄), and a lithium-containing transition-metal oxide such as a lithium titanium oxide. A sulfide (sulfide inorganic-solid electrolyte) is preferably used as the inorganic solid electrolyte. For example, at least one sulfide containing Li₂S and at least one element selected from the group consisting of the group 13 element, the group 14 element, and the group 15 element in the periodic table is preferably used. The elements of groups 13 to 15 in the periodic table are not particularly limited. For example, P, Si, Ge, As, Sb, and Al may be used. P, Si, and Ge are preferable and P is particularly preferable. Moreover, a sulfide containing these elements (particularly P) and Li is also preferable. The solid electrolyte suitable for the solid-electrolyte layer 6 may be identical to or different from the solid electrolyte used for the positive layer 5 and the negative layer 7.

The positive-electrode active material, the negative-electrode active material, and the solid electrolyte are not limited to the foregoing materials. Ordinary materials in the field of batteries are also usable.

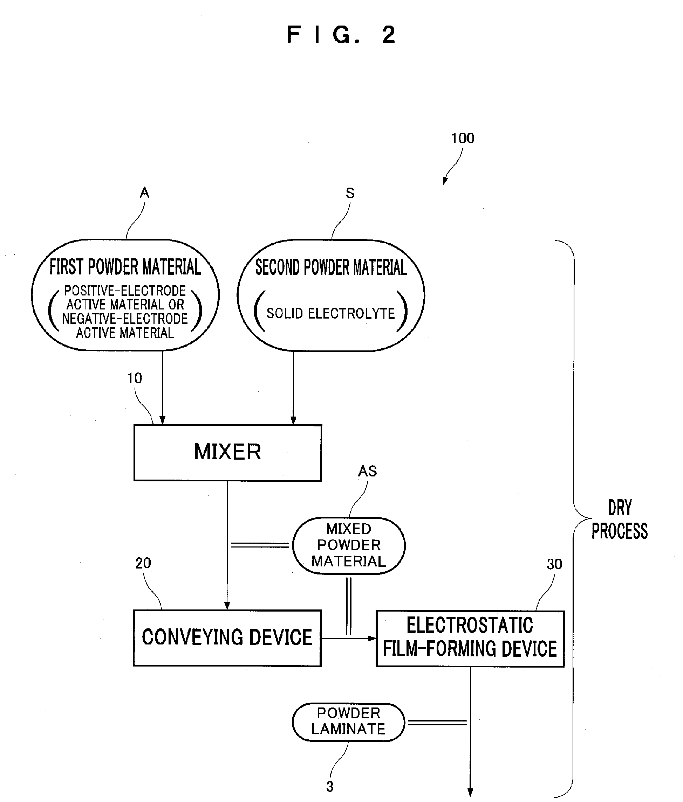

Referring to FIG. 2, an installation 100 for manufacturing the all-solid secondary battery 1 will be described below.

As illustrated in FIG. 2, the manufacturing installation 100 includes a mixer 10 for mixing multiple kinds (e.g., two kinds in FIG. 2) of powder materials A and S, a conveying device 20 for conveying a powder material AS mixed by the mixer 10, and an electrostatic film-forming device 30 for forming the powder film from the powder material AS conveyed by the conveying device 20. The electrostatic film-forming device 30 also forms the powder laminate 3 by stacking the formed powder films, that is, forming another powder film on the formed powder film. In the manufacturing installation 100, a process from the multiple kinds of powder materials A and S to the formation of the powder laminate 3 or later is a dry process.

As indicated in FIG. 2, the powder materials A and S to be mixed by the mixer 10 are, for example, a first powder material A that is a powder material of a positive-electrode active material or a negative-electrode active material and a second powder material S that is a powder material of a solid electrolyte or the like. The multiple kinds of powder materials A and S preferably have small variations in particle size and thus may be extracted and used in a predetermined particle-size range through a sizing operation after processing using a ball mill or the like.

The mixer 10 mixes the multiple kinds of powder materials A and S to a uniform state by, for example, processing using a ball mill or the like. The degree of uniformity in mixing is determined according to the degree of mixing. For example, the color densities of the mixed powder material AS are measured at multiple points and the degree of mixing is determined according to the distribution or the standard deviation of the color densities measured at the multiple points. The multiple kinds of powder materials A and S have different color densities and thus the measurement of the color densities of the mixed powder material AS can determine the ratios of the specific powder materials A and S in the mixed powder material AS. The degree of mixing is a value corresponding to the distribution or the standard deviation (that is, variations) of the measured color densities. Thus, the smaller the value, the higher the degree of uniformity in mixing. Hence, the mixer 10 mixes the multiple kinds of powder materials A and S until the degree of mixing falls to a predetermined value or less. The mixed powder material AS also preferably has small variations in particle size and thus may be extracted and used in a predetermined particle-size range through a sizing operation.

The conveying device 20 preferably conveys the powder material AS without vibrating the mixed powder material AS. Typically, a mixture of the multiple kinds of powder materials A and S having different particle sizes or densities may be separated into the powder materials A and S by vibrations. For this reason, the conveying device 20 does not vibrate the mixed powder material AS, thereby stably conveying the powder material AS (in a uniformly mixed state). Specifically, in order to avoid vibrations applied to the mixed powder material AS, the conveying device 20 has, for example, divided containers for conveying the powder material AS for the respective powder films to be formed by the electrostatic film-forming device 30.

The electrostatic film-forming device 30 uses at least an electrostatic force for forming the powder films. In other words, the electrostatic film-forming device 30 may use other forces (including gravity, a vibrating force and/or a pressing force) for forming the powder films in addition to an electrostatic force. The electrostatic film-forming device 30 can form a flat powder film having a uniform thickness by using at least an electrostatic force. The electrostatic film-forming device 30 includes, for example, a powder loading member to be loaded with the powder material AS and a direct-current power supply that causes a drop of the powder material AS from the powder loading member to form the powder film by an electrostatic force. The powder loading member and the direct-current power supply are not illustrated. The electrostatic film-forming device 30 preferably includes a cleaning tool for cleaning, each time a predetermined number of powder films are formed, instruments used for forming the powder films. This prevents the powder material AS left on the instruments by the formation of the powder films from adversely affecting the formation of a subsequent powder film with the instruments. In the above description, the electrostatic film-forming device 30 in FIG. 2 also forms the powder laminate 3 by stacking the formed powder films, that is, forming another powder film on the formed powder film. However, the electrostatic film-forming device 30 may not form the powder laminate 3. In this case, the manufacturing installation 100 is provided with another device for forming the powder laminate 3 by stacking the powder films formed by the electrostatic film-forming device 30.

The installation 100 for manufacturing the all-solid secondary battery 1 may have other configurations. In any configuration, processes from the multiple kinds of powder materials A and S to the formation of at least the powder laminate 3 or later are all dry processes. In other words, configurations from a location for storing the multiple kinds of powder materials A and S to the process of forming at least the powder laminate 3 are all dry processes in the manufacturing installation 100, the configurations including the mixer 10, the conveying device 20, and the electrostatic film-forming device 30. In this case, the dry process is a liquid-free process. Since the manufacturing installation 100 is provided for a dry process, liquids such as a solvent are unused contrary to a wet process, causing no problems resulting from the use of solvents. In other words, in the powder laminate 3 formed by the dry process, the impurities such as a solvent are not left and a cavity formed by removing the impurities such as a solvent is not left. The manufacturing installation 100 naturally eliminates the need for a device for drying the powder laminate 3 unlike in a wet process.

A method of using the installation 100 for manufacturing the all-solid secondary battery 1, in other words, a method of manufacturing the all-solid secondary battery 1 by using the manufacturing installation 100 will be described below.

First, the mixer 10 mixes the multiple kinds of powder materials A and S. In other words, the mixer 10 provides a mixing step of mixing the multiple kinds of powder materials A and S.

Subsequently, the powder material AS mixed by the mixer 10 is conveyed from the mixer 10 to the electrostatic film-forming device 30 by the conveying device 20. In other words, the conveying device 20 provides a conveying step of conveying the mixed powder material AS from the mixer 10 to the electrostatic film-forming device 30.

Thereafter, the electrostatic film-forming device 30 forms the powder film from the mixed powder material AS by using at least an electrostatic force. In other words, the electrostatic film-forming device 30 provides an electrostatic-film forming step of forming the powder film from the mixed powder material AS by using at least an electrostatic force. The electrostatic film-forming device 30 or another device then forms the powder laminate 3 by stacking the formed powder films. In other words, the electrostatic film-forming device 30 or another device provides a powder-laminate forming step of forming the powder laminate 3 by stacking the powder films.

The mixing step, the conveying step, the electrostatic-film forming step, and the powder-laminate forming step are all dry processes. Hence, in the powder laminate 3 formed by these steps, impurities are not left and a cavity formed by removing the impurities is not left. The powder laminate 3 is interposed between the positive current collector 2 and the negative current collector 4 as illustrated in FIG. 1, so that the electrodes body 2 to 4 is obtained. The electrodes body 2 to 4 is each stacked as one layer or multiple layers and is optionally contained in the outer package 8, e.g., the laminated pack 8 or the can, forming the all-solid secondary battery 1.

As has been discussed, according to the installation 100 for manufacturing the all-solid secondary battery 1, the impurities such as a solvent are not left contrary to a wet-process method and a cavity formed by removing impurities is not left in the formed powder laminate **3.** This can improve the battery performance of the all-solid secondary battery 1 manufactured from the powder laminate 3. Moreover, according to the installation 100 for manufacturing the all-solid secondary battery 1, a device for drying the powder laminate 3 is not necessary, thereby simplifying the overall configuration and reducing the cost for manufacturing the all-solid secondary battery 1.

### [Second Embodiment]

An installation 100 for manufacturing an all-solid secondary battery 1 according to a second embodiment will be described below in accordance with the accompanying drawings. The second embodiment will more specifically describe the first embodiment. Configurations omitted in the first embodiment will be mainly discussed below. The same configurations as those of the first embodiment are indicated by the same reference numerals and the explanation thereof is omitted.

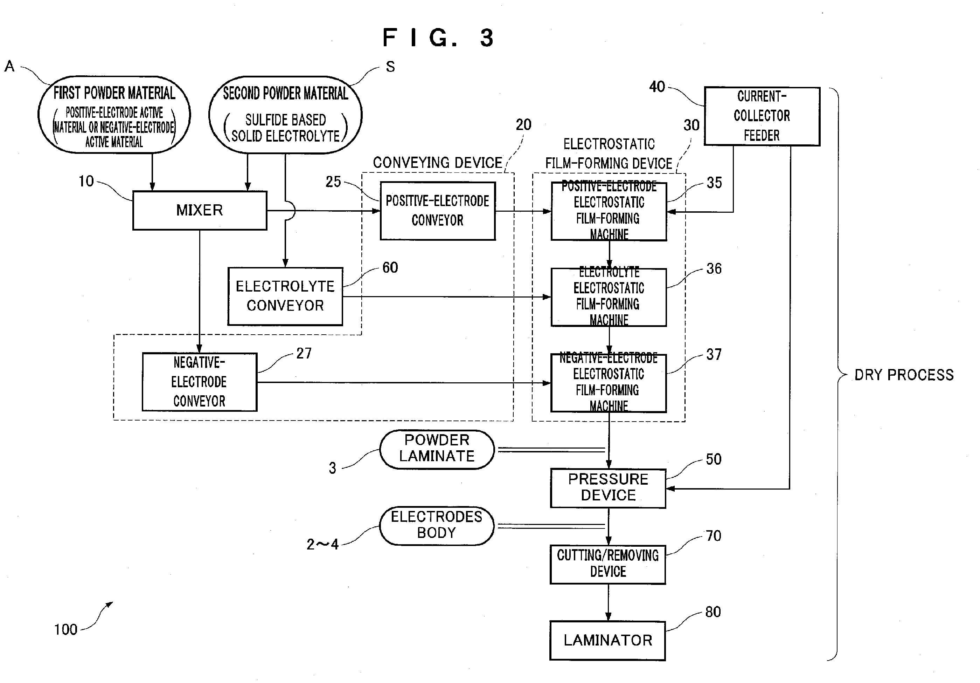

As illustrated in FIG. 3, in the installation 100 for manufacturing the all-solid secondary battery 1 according to the second embodiment, a first powder material A is a powder material of a positive-electrode active material or a negative-electrode active material and a second powder material S is a powder material of a sulfide based solid electrolyte.

A conveying device 20 for conveying a powder material AS mixed by a mixer 10 includes a positive-electrode conveyor 25 for conveying the powder material AS for forming a positive layer 5 and a negative-electrode conveyor 27 for conveying the powder material AS for forming a negative layer 7. The manufacturing installation 100 includes an electrolyte conveyor 60 for conveying a powder material S of the sulfide based solid electrolyte that is the second powder material S, as a powder material conveyor in addition to the conveying device 20. The positive-electrode conveyor 25, the electrolyte conveyor 60, and the negative-electrode conveyor 27 may all have the same configuration or different configurations.

An electrostatic film-forming device 30 includes a positive-electrode electrostatic film-forming machine 35 for forming the positive layer 5, an electrolyte electrostatic film-forming machine 36 for forming a solid-electrolyte layer 6, and a negative-electrode electrostatic film-forming machine 37 for forming the negative layer 7. In the electrostatic film-forming device 30, the positive-electrode electrostatic film-forming machine 35, the electrolyte electrostatic film-forming machine 36, and the negative-electrode electrostatic film-forming machine 37 are sequentially disposed from the upstream side. Specifically, the electrostatic film-forming device 30 is configured such that the positive layer 5 is formed by the positive-electrode electrostatic film-forming machine 35, the solid-electrolyte layer 6 is formed on the positive layer 5 by the electrolyte electrostatic film-forming machine 36, and the negative layer 7 is formed on the solid-electrolyte layer 6 by the negative-electrode electrostatic film-forming machine 37 (that is, powder laminate 3 is formed). The positive-electrode electrostatic film-forming machine 35, the electrolyte electrostatic film-forming machine 36, and the negative-electrode electrostatic film-forming machine 37 may all have the same configuration or different configurations. The solid-electrolyte layer 6 formed by the electrolyte electrostatic film-forming machine 36 is made of the powder material S of a sulfide based solid electrolyte. Thus, the solid-electrolyte layer 6 is a layer made of a sulfide based solid electrolyte.

The installation 100 for manufacturing the all-solid secondary battery 1 according to the second embodiment includes a current-collector feeder 40 for feeding a positive current collector 2 and a negative current collector 4. The current-collector feeder 40 feeds the positive current collector 2 to the positive-electrode electrostatic film-forming machine 35, so that the positive layer 5 is formed on the positive current collector 2. Furthermore, the current-collector feeder 40 feeds the negative current collector 4 to a pressure device 50, which will be described later, so that the powder laminate 3 to be pressurized by the pressure device 50 is replaced with the electrodes body 2 to **4.** Before the positive layer 5, the solid-electrolyte layer 6, and the negative layer 3 are formed, the powder films may be leveled with a small pressure at any time. Furthermore, on the positive current collector 2 and/or the negative current collector 4 fed from the current-collector feeder 40, a rough surface is formed in contact with the positive layer 5 and/or the negative layer 7. The rough surface is formed on the positive current collector 2 and/or the negative current collector 4, thereby roughening the positive layer 5 and/or the negative layer 7 in contact with the surface. In other words, roughness on the surface of the positive current collector 2 and/or the negative current collector 4 is transferred to the positive layer 5 and/or the negative layer 7.

The installation 100 for manufacturing the all-solid secondary battery 1 according to the second embodiment further includes the pressure device 50 for pressurizing the electrodes body 2 to 4, a cutting-removing device 70 for cutting and removing an outer end portion of the electrodes body 2 to 4 pressurized by the pressure device 50, and a laminator 80 for sealing the electrodes body 2 to 4 into a laminated pack 8 after the outer end portion is cut and removed. In some cases, a layering device or a layering laminator is necessary.

The pressure device 50 pressurizes the electrodes body 2 to 4 in the thickness direction. The pressurization (hereinafter, will be also referred to as main pressurization) makes powder denser in the powder laminate 3 of the electrodes body 2 to 4, thereby improving the battery performance. The pressure device 50 includes a pressing body, which is not illustrated, for pressurizing the electrodes body 2 to 4. Before the main pressurization, the pressure device 50 may apply a lower pressure than that of the main pressurization under low-vacuum environments. If only the main pressurization is performed on the electrodes body 2 to 4, gas in the powder laminate 3 of the electrodes body 2 to 4 may be rapidly pressed out by the main pressurization, increasing the possibility of a break in the powder laminate 3. However, if a low pressure is applied to the electrodes body 2 to 4 in advance under low-vacuum environments (hereinafter, will be also referred to as vacuum provisional pressurization), gas in the powder laminate 3 is properly discharged in advance and thus is not rapidly pressed out in the subsequent main pressurization, so that the powder laminate 3 is hardly broken. The pressure device 50 may be manually operated or operated by another controller, which is not illustrated, in order to perform the vacuum provisional pressurization and the main pressurization. If an operation is performed by another controller, the controller includes a vacuum temporary pressure unit that causes the pressure device 50 to perform vacuum provisional pressurization and a main pressure unit that causes the pressure device 50 to perform the main pressurization.

The cutting-removing device 70 cuts and removes the outer end portion of the electrodes body 2 to 4 because the battery performance is likely to deteriorate on the outer end portion. Only the central portion of the electrodes body 2 to 4 other than the outer end portion is used for the all-solid secondary battery 1. Since the powder laminate 3 of the electrodes body 2 to 4 is formed by pressurizing powder materials, deformation and/or a short circuit are likely to occur on the outer end. In the event of deformation and/or a short circuit on the outer end of the powder laminate 3, the outer end is cut and removed by the cutting-removing device 70, thereby preventing deterioration of the battery performance due to the deformation and/or the short circuit. For the cutting-removing device 70, for example, a method of stamping the central portion of the electrodes body 2 to 4 or a method of cutting the outer end portion of the electrodes body 2 to 4 (e.g., a chocolate break method) is used. In the method of stamping the central portion of the electrodes body 2 to 4, the cutting-removing device 70 includes a die for holding the outer end portion of the electrodes body 2 to 4 and a punch for stamping the central portion of the electrodes body 2 to 4 with the outer end portion held by the die. The dies and the punch are not illustrated. In the method of cutting the outer end portion of the electrodes body 2 to 4 (specifically, the chocolate break method), the cutting-removing device 70 includes a cutter blade for forming a cutting groove along the inner edge of a portion to be cut on the electrodes body 2 to 4, a retainer plate for retaining the central portion of the electrodes body 2 to 4 where the cutting groove is formed, and a separating tool for separating the outer end portion of the electrodes body 2 to 4 retained by the retainer plate, along the cutting groove by a bending moment.

The laminator 80 seals the electrodes body 2 to 4 into the laminated pack 8 after the outer end portion is cut and removed. The electrodes body 2 to 4 is each stacked as one layer or multiple layers. In the case of multiple layers, a current collector for electrically connecting the layers is optionally provided. The laminator 80 may include a vacuum pump for sealing the electrodes body 2 to 4 into the laminated pack 8 in a high-vacuum atmosphere. When the electrodes body 2 to 4 is sealed into the laminated pack 8 in a high-vacuum atmosphere, the electrodes body 2 to 4 of the manufactured all-solid secondary battery 1 always receive an atmospheric pressure from the outside due to a pressure difference between the inside and the outside of the laminated pack 8. Thus, powder in the powder laminate 3 of the electrodes body 2 to 4 is kept dense.

In the installation 100 for manufacturing the all-solid secondary battery 1 according to the second embodiment, the mixer 10, the conveying device 20, the electrolyte conveyor 60, the electrostatic film-forming device 30, the current-collector feeder 40, the pressure device 50, the cutting-removing device 70, and the laminator 80 are all provided for a dry process and are disposed in, for example, a dry room.

A method of using the installation 100 for manufacturing the all-solid secondary battery 1, in other words, a method of manufacturing the all-solid secondary battery 1 by using the manufacturing installation 100 will be described below.

First, the mixer 10 mixes a powder material of a positive-electrode active material (first powder material A) and a powder material of a sulfide based solid electrolyte (second powder material S). A mixed powder material AS is conveyed to the positive-electrode electrostatic film-forming machine 35 by the positive-electrode conveyor 25. Concurrently, the powder material of the sulfide based solid electrolyte (second powder material S) is conveyed to the electrolyte electrostatic film-forming machine 36 by the electrolyte conveyor 60. Meanwhile, the mixer 10 mixes the powder material of the negative-electrode active material (first powder material A) and the powder material of the sulfide based solid electrolyte (second powder material S). The mixed powder material AS is conveyed to the negative-electrode electrostatic film-forming machine 37 by the negative-electrode conveyor 27.

The positive-electrode electrostatic film-forming machine 35 forms the positive layer 5 on the positive current collector 2 fed from the current-collector feeder 40. The electrolyte electrostatic film-forming machine 36 forms the solid-electrolyte layer 6 on the positive layer 5. The negative-electrode electrostatic film-forming machine 37 forms the negative layer 7 on the solid-electrolyte layer 6, thereby forming the powder laminate 3.

The negative current collector 4 fed from the current-collector feeder 40 is placed on the negative layer 7 of the powder laminate 3 by the pressure device 50, thereby forming the electrodes body 2 to 4. Subsequently, the pressure device 50 performs the main pressurization on the electrodes body 2 to 4 or the vacuum provisional pressurization before the main pressurization. In other words, the pressure device 50 provides a main pressurization step of performing the main pressurization on the electrodes body 2 to 4 or a vacuum provisional pressurization step and the main pressurization step.

The cutting-removing device 70 cuts and removes the outer end portion of the electrodes body 2 to 4. The battery performance is likely to deteriorate on the outer end portion. In other words, the cutting-removing device 70 provides a cutting-removing step of cutting and removing the outer end portion of the electrodes body 2 to 4.

The laminator 80 seals the electrodes body 2 to 4 into the laminated pack 8 in a high-vacuum atmosphere after the outer end portion is cut and removed. The electrodes body 2 to 4 is each stacked as one layer or multiple layers. In the case of multiple layers, a current collector for electrically connecting the layers is optionally provided. In other words, the laminator 80 provides a laminating step of sealing the electrodes body 2 to 4 into the laminated pack 8 in a high-vacuum atmosphere.

As has been discussed, in the installation 100 for manufacturing the all-solid secondary battery 1 according to the second embodiment, powder in the powder laminate 3 is made denser through the main pressurization performed by the pressure device 50 in addition to the effect of the first embodiment, thereby further improving the battery performance. By performing, in particular, the vacuum provisional pressurization before the main pressurization, the powder laminate 3 becomes resistant to deformation, thereby further improving the battery performance.

The cutting-removing device 70 cuts and removes the outer end portion of the electrodes body 2 to 4 because the battery performance is likely to deteriorate on the outer end portion, and the central portion of the electrodes body 2 to 4 is used for the all-solid secondary battery because high battery performance is obtained at the central portion. Thus, the battery performance can be further improved.

Moreover, the laminator 80 causes the electrodes body 2 to 4 to always receive an atmospheric pressure from the outside. Thus, powder in the powder laminate 3 of the electrodes body 2 to 4 is kept dense so as to further improve the battery performance.

In the first and second embodiments, the positive layer 5 is first formed and then the negative layer 7 is formed. The negative layer 7 may be formed prior to the positive layer 5. Specifically, in FIGS. 1 and 3, the positive layer 5, the positive-electrode conveyor 25, and the positive-electrode electrostatic film-forming machine 35 may be replaced with the negative layer 7, the negative-electrode conveyor 27, and the negative-electrode electrostatic film-forming machine 37.

The first embodiment described the configuration of the all-solid secondary battery 1 in accordance with FIG. 1. The configuration is not limited to the one illustrated in FIG. 1 as long as at least the powder laminate 3 is provided.

The manufacturing installation 100 may be provided with a pressurizing charger/discharger for charging and discharging (hereinafter, will be referred to as pressurizing charge/discharge) the electrodes body 2 to 4 while applying a pressure. The pressurizing charger/discharger was not described in the second embodiment. By the pressurizing charge and discharge of the electrodes body 2 to 4 (or stacked electrodes bodies 2 to 4), the powder laminate 3 of the electrodes body 2 to 4 expands and shrinks while being pressed by the positive current collector 2 and the negative current collector 4. This allows the powder laminate 3 to sufficiently catch the rough surfaces of the positive current collector 2 and the negative current collector 4, thereby further improving the battery performance in an unpressurized state.

Additionally, the first and second embodiments did not describe the specific configurations of the electrostatic film-forming device 30 and the powder laminate forming step. For example, the electrostatic film-forming device 30 and the powder laminate forming step may be configured as follows:

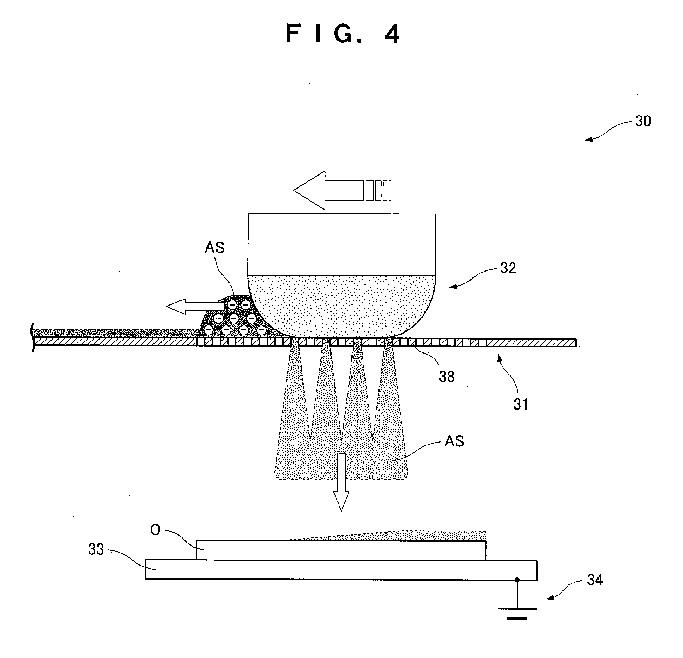

Referring to FIG. 4, a first specific example of the electrostatic film-forming device 30 capable of forming a powder film with a uniform thickness will be described below.

### [First specific example of the electrostatic film-forming device 30]

As illustrated in FIG. 4, the electrostatic film-forming device 30 includes a screen printing plate 31 that is electrically neutral and is not in contact with a target O where a powder film is to be formed, a rubbing member 32 that rubs the negatively (or positively) charged powder material AS into the screen printing plate 31 and drops the powder material AS onto the target O, a base 33 for placing the target O, and a direct-current power supply 34 for positively charging the base 33.

The screen printing plate 31 has a mesh part 38 where the powder material AS is rubbed by the rubbing member 32. The material of the mesh part 38 may be selected from, for example, polyester, nylon, stainless, or polyethylene. Other materials may be used according to the used powder material AS. If the powder material AS placed on the screen printing plate 31 is negatively charged, the screen printing plate 31 is preferably made of a material (nylon or rayon) positively charged in the triboelectric series or a metal such that the powder material AS is not positively charged by friction resulting from rubbing by the rubbing member 32. If the powder material AS placed on the screen printing plate 31 is positively charged, the screen printing plate 31 is preferably made of a material (polyethylene or polyester) negatively charged in the triboelectric series or a metal such that the powder material AS is not negatively charged by friction resulting from rubbing by the rubbing member 32.

The rubbing member 32 is, for example, a squeegee or a sponge. The rubbing member 32 may be replaced with an air-nozzle that drops the powder material AS from the screen printing plate 31 to the target O by blowing gas.

In order to negatively (or positively) charge the powder material AS placed on the screen printing plate 31, the powder material AS is brought into contact with a plate carrying a negative (or positive) voltage, which is not illustrated. When the powder material AS is brought into contact with the plate, the negative plate (or positive plate) is vibrated so as to charge fine particles constituting the powder material AS. Instead of the method of vibrating the negative plate (or positive plate) in contact with the powder material AS, the powder material AS may be charged by friction or corona discharge. Thus, the powder material AS to be placed on the screen printing plate 31 is negatively (positively) charged before being placed on the screen printing plate 31, ensuring negative (or positive) charge as compared with negative charge through the screen printing plate 31.

As illustrated in FIG. 4, if the powder material AS placed on the screen printing plate 31 is negatively charged, the base 33 is connected to the positive electrode of the direct-current power supply 34 so as to be positively charged. If the powder material AS placed on the screen printing plate 31 is positively charged, the base 33 is connected to the negative electrode of the direct-current power supply 34 so as to be negatively charged. This configuration is not illustrated.

Thus, according to the first specific example of the electrostatic film-forming device 30, the powder material AS placed on the screen printing plate 31 is negatively (positively) charged with reliability, so that the powder material AS is uniformly dropped from the screen printing plate 31 to the target O positively (or negatively) charged through the base 33. This can form the powder film having a uniform thickness.

The formation of the powder film with a uniform thickness by the electrostatic film-forming device 30 was examined in first to third experimental examples and a comparative example as follows:

In the first experimental example, the electrostatic film-forming device 30 in FIG. 4 was used. On the screen printing plate 31 of the electrostatic film-forming device 30, the mesh part 38 (opening) had a square shape, 300 meshes per inch, a wire diameter of 30 µm, and an opening of 55 µm. As powder materials placed on the screen printing plate 31, 17 heavy calcium carbonates were used for experiments. In order to negatively charge the powder material, the powder material was brought into contact with the vibrating positive plate that carries a voltage of about -200 V to -100 V.

In the second experimental example, the polarity of charge in the first experimental example was reversed. Specifically, the powder material was positively charged and the base 33 was negatively charged. The second experimental example is identical to the first experimental example except for the polarity.

In the third experimental example, the rubbing member 32 of the first experimental example was replaced with an air-nozzle. The third experimental example is identical to the first experimental example except for the air-nozzle.

In the comparative example, the powder material was not charged before being placed on the screen printing plate 31 illustrated in FIG. 4. The powder material was rubbed into the negatively charged screen printing plate 31 by the rubbing member 32, so that the powder film was formed on the target O.

Table 1 shows data regarding the thicknesses of powder films formed in the examples. Table 1 shows the results of the first to third experimental examples and the comparative example that were all intended to form each powder film having a thickness of 100 µm.

**[Table 1]**

| | Mean thickness [µm] | Maximum thickness [µm] | Minimum thickness [µm] | Thickness difference [µm] | Standard deviation [µm] | Standard deviation / mean thickness [%] |
|---|---|---|---|---|---|---|
| First experimental example | 105 | 154 | 87 | 67 | 36 | 34.3 |
| Second experimental example | 102 | 128 | 92 | 36 | 24 | 23.5 |
| Third experimental example | 99 | 119 | 87 | 32 | 25 | 25.3 |
| Comparative example | 102 | 131 | 89 | 42 | 28 | 27.5 |

As is evident from Table 1, the powder films formed in the first to third experimental examples can have a more uniform thickness than in the comparative example.

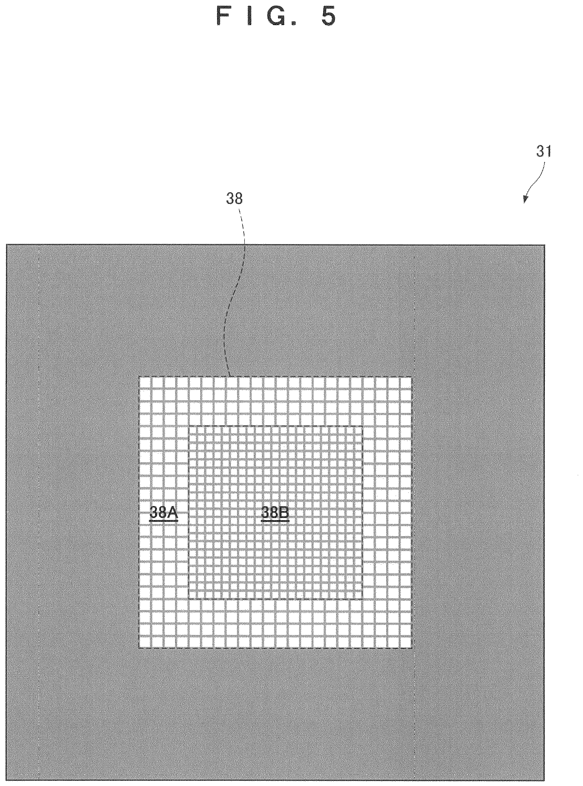

Referring to FIG. 5, a second specific example of the electrostatic film-forming device 30 capable of obtaining a desired thickness at any location in the powder film will be described below.

### [Second specific example of the electrostatic film-forming device 30]

The electrostatic film-forming device 30 includes the screen printing plate 31 illustrated in FIG. 5 and a known configuration necessary for electrostatic film formation. Naturally, the configuration in FIG. 4 is usable other than the known configuration. The screen printing plate 31 in FIG. 5 includes the mesh part 38 (opening) where apertures and/or opening ratios vary among locations. The shape of the mesh part 38 is not limited to a rectangle. The mesh part 38 may be polygonal or circular in shape. The screen printing plate 31 is not always disposed in parallel with the target O where the powder film is formed. The screen printing plate 31 may be inclined (10° to 40°) with respect to the target O. In the example of FIG. 5, the mesh part 38 has a large aperture and a large opening ratio on a surrounding part (hereinafter, will be referred to as a first mesh part 38A) and a small aperture and a small opening ratio in a part (hereinafter, will be referred to as a second mesh part 38B) surrounded by the first mesh part 38A. By using the screen printing plate 31 having the mesh part 38, the formed powder film has a large thickness corresponding to the first mesh part 38A having a large aperture and a large opening ratio and has a small thickness corresponding to the second mesh part 38B having a small aperture and a small opening ratio.

In the fourth experimental example, the screen printing plate 31 in FIG. 5 was used in the configuration of the comparative example. The screen printing plate 31 has an aperture of 104 µm, an opening ratio of 61.1%, 190 meshes per inch, and a wire diameter of 29 µm in the first mesh part 38A and has an aperture of 55 µm, an opening ratio of 42.9%, 302 meshes per inch, and a wire diameter of 29 µm in the second mesh part 38B. The screen printing plate 31 in parallel with the target O was disposed at a distance of 10 mm from the target O and carried a voltage of 5 kV. The powder material was dropped from the screen printing plate 31 to the target O by the rubbing member 32 while the voltage was applied, so that the powder film was formed. The powder film had a thickness of 600 µm to 700 µm at a point corresponding to the first mesh part 38A and had a thickness of 300 µm to 400 µm at a point corresponding to the second mesh part 38B.

By using the screen printing plate 31 including the mesh part 38 where apertures and/or opening ratios vary among locations, a desired thickness can be obtained at any point of the powder film.

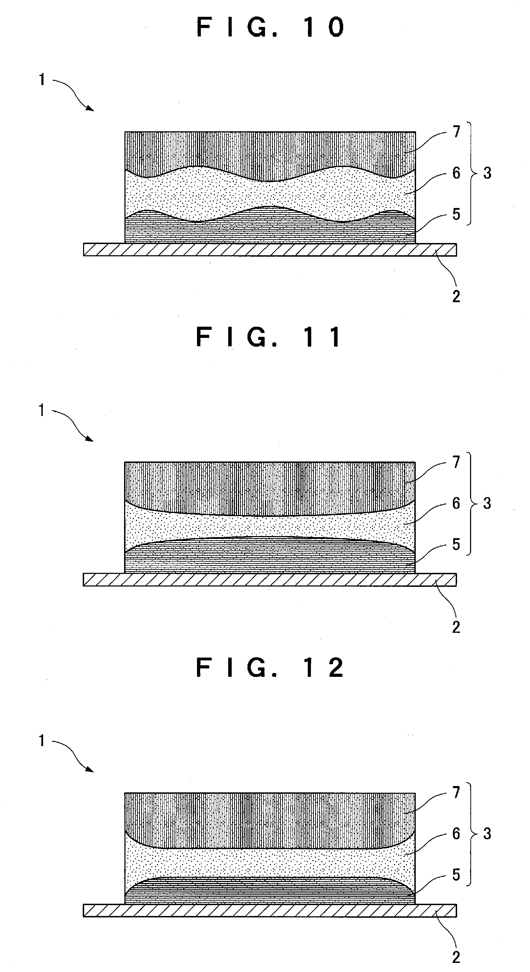

Referring to FIGS. 10 to 12, a specific example of the powder-laminate forming step of obtaining a desired thickness at any location in the powder film will be described below.

### [Specific example of the powder-laminate forming step]

Unlike in FIG. 1, the powder laminate 3 formed in the powder-laminate forming step does not have a flat boundary between the positive layer 5 and the solid-electrolyte layer 6 and/or a flat boundary between the negative layer 7 and the solid-electrolyte layer 6. For example, the boundary may have waviness as illustrated in FIGS. 10 to 12. However, it is preferable to perform stacking to flatten the overall powder laminate 3. The solid-electrolyte layer 6 is increased in thickness on the end of the powder laminate 3. Thus, even if the end of the laminate 3 is deformed, a short circuit is unlikely to occur on the end. In the powder laminate 3, the outer surfaces of the positive layer 5 and the negative layer 7 (surfaces in contact with the positive current collector 2 and the negative current collector 4) are flat as illustrated in FIGS. 10 to 12 (the negative current collector 4 is omitted). The waviness is not caused by the roughness components of short wavelengths but is caused by the waviness components of long wavelengths. A cutoff value for discriminating between roughness components and waviness components preferably ranges from 0.08 mm to 2.50 mm. Moreover, regarding the waviness, the positive layer 5, the solid-electrolyte layer 6, and the negative layer 7 preferably satisfy the following formula: (Maximum thickness - minimum thickness)/mean thickness = 0.1 to 2.0

As illustrated in FIGS. 10 to 12, on the end of the powder laminate 3, the positive layer 5 and the negative layer 7 preferably have small thicknesses, and the solid-electrolyte layer 6 preferably has a large thickness. If the powder laminate 3 in particular is polygonal in plan view, the solid-electrolyte layer 6 preferably has quite a large thickness at each corner relative to the thicknesses of the positive layer 5 and the negative layer 7. This reduces the possibility of a short circuit on the ends of the positive layer 5 and the negative layer 7. Furthermore, as illustrated in FIGS. 10 to 12, the negative layer 7 is preferably larger in thickness than the positive layer 5 at any point in the powder laminate 3. The thickness of the negative layer 7 in particular is preferably set at 1.05 to 2.00 relative to the thickness of the positive layer 5. This prevents a short circuit caused by the precipitation of Li in the negative layer 7 and the inhibition of the growth toward the positive layer 5, and improves the cycle characteristics of the all-solid secondary battery 1.

In the powder-laminate forming step, any method may be used as long as the powder laminate 3 having the waviness is formed. As has been discussed in the second specific example of the electrostatic film-forming device 30, the powder laminate 3 having waviness may be formed by using the mesh part 38 (opening) where apertures and/or opening ratios vary among locations.

In the powder-laminate forming step, the positive layer 5, the solid-electrolyte layer 6, and the negative layer 7 may be pressurized each time the layer is formed. In this case, in order to pressurize the overall layers while leaving part of the waviness of the layers, the pressing member of the pressure device 50 is preferably made of an elastic material.

In the powder laminate 3, the solid-electrolyte layer 6 may be increased in thickness and the positive layer 5 and the negative layer 7 may be reduced in thickness toward the end of the powder laminate 3 such that the only the solid-electrolyte layer 6 is provided on the outermost end. This configuration is not illustrated. It is preferable to flatten the overall powder laminate 3.

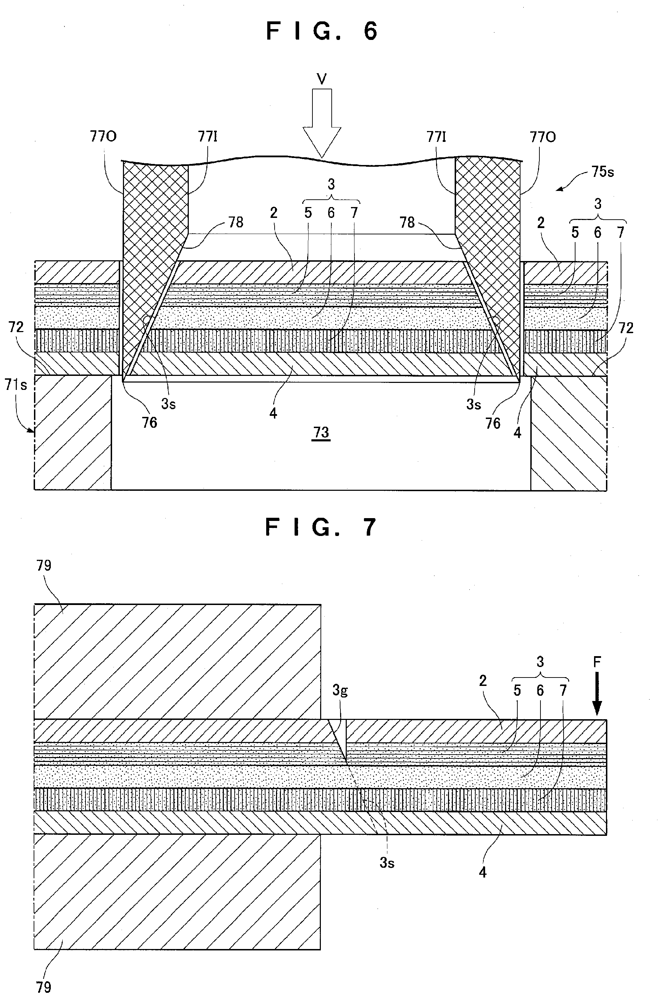

Referring to FIGS. 6 to 9, the first to fourth specific examples of the cutting-removing device 70 for cutting and removing the outer end portion of the electrodes body 2 to 4 will be described below.

### [First specific example of the cutting-removing device 70]

As illustrated in FIG. 6, the cutting-removing device 70 is a device for using the method of stamping the central portion of the electrodes body 2 to 4 (at least the powder laminate 3) and a device for inclining sides 3s at the central portion of the electrodes body 2 to 4 by stamping. Specifically, the cutting-removing device 70 includes an inclined-side forming die 71s for holding the outer end portion of the electrodes body 2 to 4 and an inclined-side forming punch 75s for stamping the central portion of the electrodes body 2 to 4 with the outer end portion held by the inclined-side forming die 71s.

The inclined-side forming die 71s includes a base surface 72 on which the electrodes body 2 to 4 is placed and a space portion 73 through which the inclined-side forming punch 75s passes. Moreover, it is not necessary to press downward the electrodes body 2 to 4 for being held, which are placed on the base surface 72, by the inclined-side forming die 71s. This is because the powder laminate 3 serving as a main configuration of the electrodes body 2 to 4 is a brittle material including one powder film or stacked powder films and the powder laminate 3 being stamped is broken before being largely deformed. Hence, the inclined-side forming die 71s does not include a retainer plate for retaining the electrodes body 2 to 4. Thereby the inclined-side forming die 71s holds the electrodes body 2 to 4 so as to accept deformation of the electrodes body 2 to 4 being stamped. The inclined-side forming die 71s may include the retainer plate. The used retainer plate holds the electrodes body 2 to 4 with a force so as to accept deformation of the electrodes body 2 to 4 being stamped.

The inclined-side forming punch 75s has a blade 78 extending from a tip 76 to an inner surface 77I. The blade 78 cuts the electrodes body 2 to 4 by stamping. The blade 78 has the tip 76 that is sharpened and is increased in thickness toward the inner surface 77I in order to incline the side 3s that is the cut surface of the electrodes body 2 to 4. The blade 78 is not limited to an inner blade 78 extending from the tip 76 to the inner surface 77I. The blade 78 may extend from the tip 76 to both of the inner surface 77I and an outer surface 77O. Instead of the method of using the inclined-side forming die 71s and the inclined-side forming punch 75s, Thomson's method using a Thomson blade may be used.

A method of using the cutting-removing device 70 will be described below.

First, the electrodes body 2 to 4 is placed (an example of holding) on the inclined-side forming die 71s so as to cover the space portion 73. Subsequently, the inclined-side forming punch 75s is lowered at a predetermined speed V and is passed through the space portion 73, so that the electrodes body 2 to 4 is stamped by the inclined-side forming punch 75s. The stamping cuts the sides 3s of the electrodes body 2 to 4 into inclined surfaces.

In the electrodes body 2 to 4 with the inclined sides 3s, the interface between the negative layer 7 and the solid-electrolyte layer 6 has a larger area than the interface between the positive layer 5 and the solid-electrolyte layer 6.

The reason why the electrodes body 2 to 4 is shaped thus will be described below.

In the presence of an extra positive layer that is not opposed to a negative layer in a battery for which lithium ions are used, for example, a lithium-ion secondary battery, suspended metallic lithium is deposited from the end of the negative layer disposed near the extra positive layer, thereby increasing the occurrence of a short cut. Thus, in a battery for which lithium ions are used, a negative layer typically has a larger area than a positive layer.

In this configuration, however, the negative layer includes a useless part that does not overlap the positive layer. Moreover, even if the negative layer has a larger area than the positive layer, when the positive layer is displaced and is not partially opposed to the negative layer, a short circuit is likely to occur. Thus, the area of the negative layer is determined in consideration of the alignment error of the positive layer. This disadvantageously leads to an excessively large area of the negative layer, resulting in upsizing of the battery.

Unlike in this configuration, such a problem does not occur in the electrodes body 2 to 4 in which the sides 3s are inclined and the interface between the negative layer 7 and the solid-electrolyte layer 6 has a larger area than the interface between the positive layer 5 and the solid-electrolyte layer 6 as illustrated in FIG. 6. Furthermore, the electrodes body 2 to 4 with the inclined sides 3s can prevent a short circuit caused by deformation of the projecting portions of the positive layer 5 and the negative layer 7. Such a short circuit is likely to occur in a conventional all-solid secondary battery.

The inclined sides 3s of the electrodes body 2 to 4 are not limited to flat surfaces as long as the sides 3s have continuously inclined surfaces. For example, the sides 3s may have curved surfaces such as a convex surface or a concave surface. If the inclined sides 3s of the electrodes body 2 to 4 are in particular curved convex surfaces, the end part of the electrodes body 2 to 4 is hardly deformed. If the electrodes body 2 to 4 has multiple sides like polygons in plan view, the number of inclined sides 3s is not limited.

The cutting-removing device 70 cuts the electrodes bodies such that the interface between the negative layer 7 and the solid-electrolyte layer 6 has a larger area than the interface between the positive layer 5 and the solid-electrolyte layer 6. The cutting-removing device 70 may cut the electrodes bodies such that the interface between the positive layer 5 and the solid-electrolyte layer 6 has a larger area than the interface between the negative layer 7 and the solid-electrolyte layer 6.

### [Second specific example of the cutting-removing device 70]

The electrodes body 2 to 4 are shaped by the cutting-removing device 70 as in the first specific example but a chocolate break method is used instead of stamping.

As illustrated in FIG. 7, the cutting-removing device 70 includes a retainer plate 79 for vertically retaining the electrodes body 2 to 4, a cutting-groove forming member (not illustrated) for forming a cutting groove 3g for breaking (an example of cutting) the outer end portion of the electrodes body 2 to 4, and a loading part (not illustrated) for applying a load F to an end part of the electrodes body 2 to 4 having the cutting groove 3g.

The retainer plate 79 holds the electrodes body 2 to 4 with a force so as to accept deformation of the electrodes body 2 to 4 being broken.

The cutting-groove forming member forms the cutting groove 3g as a cut at the starting point of a break when the load F is applied to the end part of the electrodes body 2 to 4. Thus, the cutting groove 3g is shaped so as to incline the side 3s of the electrodes body 2 to 4 when the side 3s is formed by a break. The cutting groove 3g may be formed from the positive current collector 2 or the negative current collector 4. The cutting-groove forming member is not limited as long as the cutting groove 3g is formed by the member. For example, a cutter blade, a rotary blade (a roller with a blade), or a die having a projecting portion that matches the shape of the cutting groove 3g may be used.

The loading part generates a bending moment and/or a shearing stress at the cutting groove 3g so as to apply the load F that starts a break from the cutting groove 3g.

A method of using the cutting-removing device 70 will be described below.

First, the electrodes body 2 to 4 is vertically retained by the retainer plate 79. Subsequently, the cutting groove 3g for breaking (an example of cutting) the outer end portion of the electrodes body 2 to 4 is formed by the cutting-groove forming member. Thereafter, the loading part applies a load to the end part of the electrodes body 2 to 4 having the cutting groove 3g, thereby breaking the outer end portion from the cutting groove 3g so as to incline the side 3s of the electrodes body 2 to 4.

In addition to the foregoing steps, for example, the cutting groove 3g is formed by the cutting-groove forming member in the following two patterns: In a first pattern, the cutting groove 3g is formed on the positive current collector 2 or the negative current collector 4 in advance before the powder laminate 3 is formed. In a second pattern, the cutting groove 3g is formed on the powder laminate 3 (or the electrodes body 2 to 4) without retaining the powder laminate 3 (or the electrodes body 2 to 4) with the retainer plate 79 after the powder laminate 3 (or the electrodes body 2 to 4) is formed.

### [Third specific example of the cutting-removing device 70]

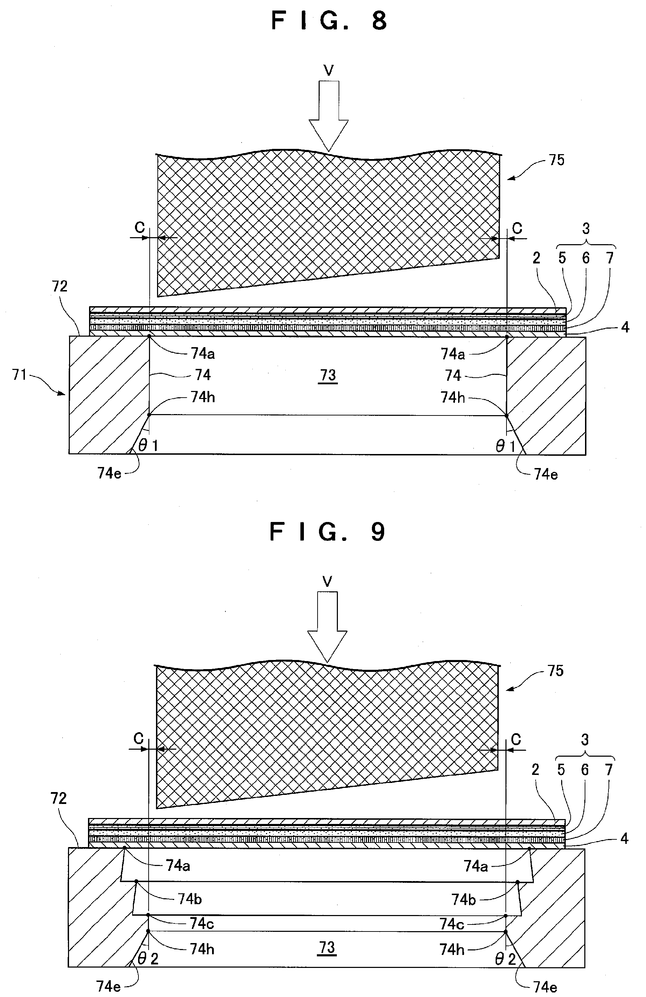

As illustrated in FIG. 8, the cutting-removing device 70 is a device for using the method of stamping the central portion of the electrodes body 2 to 4 (at least the powder laminate 3) but is not necessarily a device for inclining sides 3s at the central portion of the electrodes body 2 to 4 by stamping. The cutting-removing device 70 is a device for preventing roughness on the sides 3s formed by stamping. Specifically, the cutting-removing device 70 includes a die 71 for holding the outer end portion of the electrodes body 2 to 4 and a punch 75 for stamping the central portion of the electrodes body 2 to 4 with the outer end portion held by the die 71.

The die 71 includes the base surface 72 on which the electrodes body 2 to 4 are placed and the space portion 73 through which the punch 75 passes. The die 71 has an inner wall 74 facing the space portion 73. On the upper end of the inner wall 74, a blade 74a is formed to cut the outer end portion of the electrodes body 2 to 4 by stamping with the punch 75. The inner wall 74 is vertical at a predetermined height 74h or higher and is inclined at an angle θ1 so as to extend the space portion 73 downward at a height lower than the predetermined height 74h. The inner wall 74 has a flank surface 74e lower than the predetermined height 74h. The flank surface 74e prevents roughness on the sides 3s formed in the electrodes body 2 to 4 by stamping with the punch 75. The flank surface 74e is preferably formed under the intermediate portion of the inner wall 74 in order to extend the life of the die 71.

The punch 75 preferably has a shear angle in order to reduce thrust for stamping. The shear angle improves the accuracy of stamping depending upon the angle. The shear angle may be provided for one of the punch 75 and the die 71 or both of the punch 75 and the die 71. The punch 75 has a clearance C set at about several to several tens µm from the inner wall 74 of the die 71. The stamping speed V of the punch 75 is preferably set at 100 mm/sec or less. This is because an impact applied to the electrodes body 2 to 4, which is fragile materials, by stamping is small at a low stamping speed V and thus deformation of the electrodes body 2 to 4 by stamping is prevented. Thus, the stamping speed is preferable at 50 mm/sec or lower and is further preferable at 25 mm/sec or lower. On the punch 75 and the die 71 (also the inclined-side forming punch 75s and the inclined-side forming die 71s), portions in contact with at least the electrodes body 2 to 4 are preferably coated with an insulating material in order to prevent a short circuit caused by stamping the electrodes body 2 to 4.

A method of using the cutting-removing device 70 will be described below.

First, the electrodes body 2 to 4 is placed on the die 71 so as to cover the space portion 73. Subsequently, the punch 75 is lowered at the predetermined speed V and is passed through the space portion 73, so that the electrodes body 2 to 4 are stamped by the punch 75. The outer end portion of the electrodes body 2 to 4 is cut by stamping with the blade 74a and the central portion of the electrodes body 2 to 4 is lowered in the space portion 73. At this point, the flank surface 74e prevents roughness on the sides 3s formed in the electrodes body 2 to 4.

In all of the first to third specific examples of the cutting-removing device 70, the electrodes body 2 to 4 is preferably cut while stiffness inside the cutting position of the electrodes body 2 to 4 is higher than that outside the cutting position. In other words, in all of the first to third specific examples of the cutting-removing device 70, the electrodes body 2 to 4 is preferably cut such that stiffness at the central portion of the electrodes body 2 to 4 is higher than that on the outer end portion to be cut. With this configuration, strain caused by cutting is absorbed on the outer end portion having low stiffness, thereby preventing damage and defects on the central portion to be provided as a product.

For stamping of fragile materials such as the electrodes body 2 to 4 with high accuracy, the central portion of the electrodes body 2 to 4 is not to be stamped into a desired size by one-time stamping. It is preferable that the electrodes body 2 to 4 is stamped in a range slightly larger than the desired size and then the electrodes body 2 to 4 in the range slightly larger than the desired size is stamped into the desired size. In the stamping performed several times, particularly if a portion on the outer end has high stiffness, the portion having high stiffness is first removed by stamping, so that a range to be subsequently stamped can have higher stiffness than the outside of the range.

### [Fourth specific example of the cutting-removing device 70]

As illustrated in FIG. 9, only the inner wall 74 of the die 71 in the cutting-removing device 70 is different from that of the cutting-removing device 70 described as the third specific example. In the third specific example of the cutting-removing device 70, the electrodes body 2 to 4 is stamped one time by lowering the punch 75 one time, whereas in the fourth specific example of the cutting-removing device 70, the inner wall 74 of the die 71 has multiple blades 74a to 74c having different internal diameters, so that the electrodes body 2 to 4 is stamped several times by lowering the punch 75 one time. Specifically, as illustrated in FIG. 9, the die 71 in the cutting-removing device 70 has an upper blade 74a formed on the upper end of the inner wall 74, an intermediate blade 74b formed under and inside the upper blade 74a, and a lower blade 74c formed under and inside the intermediate blade 74b. The inner wall 74 is slightly inclined so as to extend the space portion 73 downward from the upper blade 74a to the intermediate blade 74b and is horizontally extended at the height of the intermediate blade 74b. Moreover, the inner wall 74 is slightly inclined so as to extend the space portion 73 downward from the intermediate blade 74b to the lower blade 74c and is horizontally extended at the height of the lower blade 74c. The upper blade 74a, the intermediate blade 74b, and the lower blade 74c are optionally similar in shape. The lower blade 74c determines the outside shape of a product and thus is formed according to the desired outside shape of the product, whereas it is not necessary to form the upper blade 74a and the intermediate blade 74b like the lower blade 74c. The inner wall 74 is vertical from the lower blade 74c to the predetermined height 74h and is inclined at an angle θ2 so as to extend the space portion 73 downward at a height lower than the predetermined height 74h. The inner wall 74 has the flank surface 74e lower than the predetermined height 74h. The flank surface 74e prevents roughness on the sides 3s formed in the electrodes body 2 to 4 by stamping with the punch 75.

A method of using the cutting-removing device 70 will be described below.

First, the electrodes body 2 to 4 is placed on the die 71 so as to cover the space portion 73. Subsequently, the punch 75 is lowered one time and is passed through the space portion 73, so that the electrodes body 2 to 4 is stamped three times by the inclined-side forming punch 75s. Specifically, the punch 75 moves downward through the upper blade 74a, so that the electrodes body 2 to 4 is stamped in two sizes larger than a desired size. The punch 75 then moves downward through the intermediate blade 74b, so that the electrodes body 2 to 4 in two size larger than the desired size is stamped in one size larger than the desired size. Thereafter, the punch 75 moves downward through the lower blade 74c, so that the electrodes body 2 to 4 in one size larger than the desired size is stamped in the desired size. The electrodes body 2 to 4 in the desired size move downward through the space portion 73 under the lower blade 74c. The flank surface 74e prevents roughness on the formed sides 3s.

The cutting-removing device 70 is not limited to the first to fourth specific examples as long as the outer end portion of the electrodes body 2 to 4 (at least the powder laminate 3) is cut and removed. Means for cutting the electrodes body 2 to 4 is not limited to those in the first to fourth specific examples. Cutting devices such as a laser, a Thomson blade, a shearing machine, and a cutter may be used.

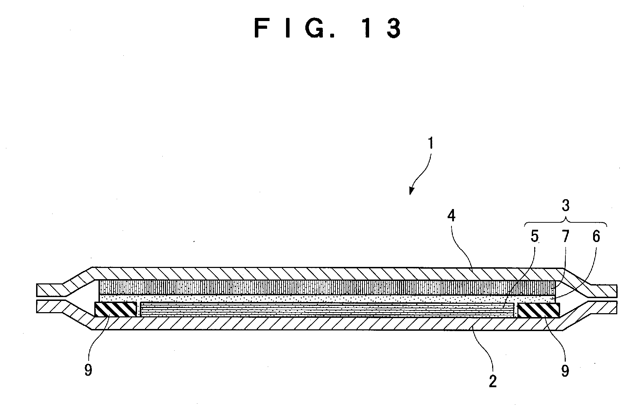

The all-solid secondary battery 1 according to the present invention includes at least the powder laminate 3. For example, without deteriorating the basic performance, the all-solid secondary battery 1 may have a structure that prevents hydrogen sulfide from leaking to the outside even if moisture enters the battery. Referring to FIGS. 13 to 15, the specific examples of the all-solid secondary battery 1 having such a structure will be described below.

### [First specific example of the all-solid secondary battery 1]

As illustrated in FIGS. 13 to 15, for example, the all-solid secondary battery 1 includes a hydrogen sulfide absorbent 9. The hydrogen sulfide absorbent 9 may be activated carbon, zeolite, a catalyst (zinc oxide) and/or dehydrator (diphosphorus pentaoxide or silica gel). Alternatively, the hydrogen sulfide absorbent 9 may be a porous body, for example, a nonwoven fabric, glass paper, or a plastic foam that contains the catalyst and/or the dehydrator. The hydrogen sulfide absorbent 9 is preferably 10 µm to several hundreds µm in thickness. If the thickness of the hydrogen sulfide absorbent 9 is larger than several hundreds µm, the electrodes body 2 to 4 and the all-solid secondary battery 1 wastefully have large outside dimensions and heavy weights. If the thickness is smaller than 10 µm, the effect of adsorbing hydrogen sulfide is weakened, so that hydrogen sulfide may leak to the outside. For example, if the hydrogen sulfide absorbent 9 is a catalyst (zinc oxide), the amount of hydrogen sulfide that can be adsorbed by the hydrogen sulfide absorbent 9 is theoretically 34.1 g (sulfur is 32.1 g) for 81.4 g of zinc oxide according to a reaction formula (H₂S + ZnO → ZnS + H₂O).

The examples of the all-solid secondary battery 1 in FIGS. 13 to 15 will be described below.

In the example of FIG. 13, the all-solid secondary battery 1 schematically includes the hydrogen sulfide absorbent 9 in the electrodes body 2 to 4. The hydrogen sulfide absorbent 9 is square in plan view, is mostly placed on the outer part of the positive layer 5 and inside the solid-electrolyte layer 6, and is disposed on the positive current collector 2. Also in the example of FIG. 13, the negative layer 7 preferably has a larger area than the positive layer 5 in order to prevent the short circuit. In this case, the end of the powder laminate 3 does not have the positive layer 5 and thus has a smaller thickness than the central portion. If the end of the powder laminate 3 has a smaller thickness than the central portion, a force applied to the end of the powder laminate 3 is smaller than that of the central portion in the pressurization step, so that the structure is likely to be deformed on the end. Furthermore, even if the area of the negative layer 7 is equal to that of the positive layer 5, the solid-electrolyte layer 6 having a larger area than the negative layer 7 and the positive layer 5 causes the powder laminate 3 to have a smaller thickness on the end than the central portion, so that the structure is likely to be similarly deformed on the end. However, the hydrogen sulfide absorbent 9 placed as illustrated in FIG. 13 suppresses the possibility of a smaller thickness on the end of the powder laminate 3 than the central portion, thereby preventing structure deformation on the end. Naturally, a short circuit is prevented because the negative layer 7 has a larger area than the positive layer 5. The hydrogen sulfide absorbent 9 is not limited to the location in FIG. 13 and thus may be disposed between the positive layer 5 and the solid-electrolyte layer 6 or between the solid-electrolyte layer 6 and the negative layer 7. If the end of the powder laminate 3 is structurally broken, for example, when a force applied to the end of the powder laminate 3 is extremely larger than that of the central portion in the pressurization step or if the powder laminate 3 has a smaller thickness on the central portion than the end, the hydrogen sulfide absorbent 9 may be disposed at the central portion of the powder laminate 3.

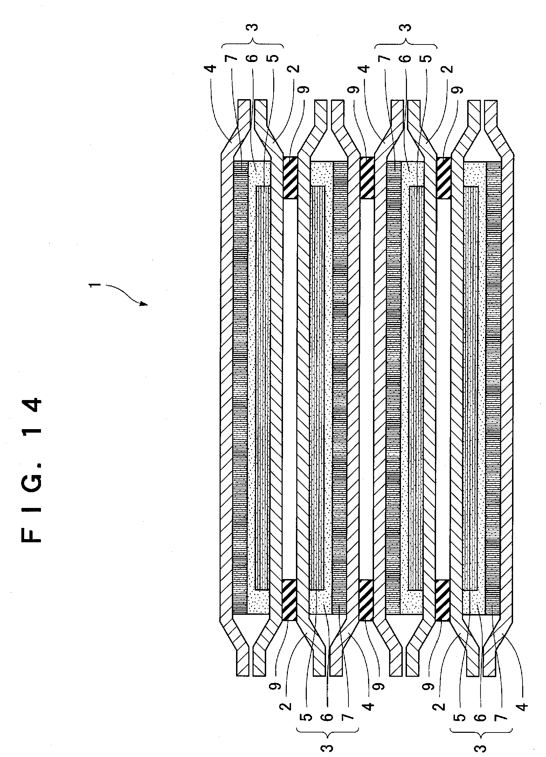

In the example of FIG. 14, the all-solid secondary battery 1 schematically includes the stacked electrodes bodies 2 to 4. The current collectors 2 and 4 of the adjacent electrodes bodies 2 to 4 have the same polarity with the hydrogen sulfide absorbent 9 interposed therebetween. In the absence of the hydrogen sulfide absorbents 9 in the structure of FIG. 14, the electrodes bodies 2 to 4 may not be accurately stacked with the same polarities opposed to each other because of a displacement of the electrodes bodies 2 to 4 and/or a deformation and/or a curvature of the electrodes bodies 2 to 4 in the pressurization step. However, in the case of the hydrogen sulfide absorbents 9 placed as illustrated in FIG. 14, a pressure is not applied to each set of the electrodes bodies 2 to 4 but is applied to two (or more) sets of the electrodes bodies 2 to 4 with the hydrogen sulfide absorbent 9 interposed therebetween, thereby preventing the displacement, deformation, and curvature. This can precisely stack the electrodes bodies 2 to 4 while preventing hydrogen sulfide from leaking to the outside. In order to increase conductivity between the adjacent electrodes bodies 2 to 4, the hydrogen sulfide absorbent 9 in FIG. 14 preferably contains a conductive material (e.g., activated carbon) serving as a chief material. The all-solid secondary battery 1 is not limited to the example of FIG. 14. The current collectors 2 and 4 of the adjacent electrodes bodies 2 to 4 may have different polarities. The hydrogen sulfide absorbent 9 may contain an insulating material (a nonwoven fabric, glass paper, or a plastic foam as a chief material). The shape of the hydrogen sulfide absorbent 9 is not limited to a square in the plan view of FIG. 14. The hydrogen sulfide absorbent 9 may be entirely shaped like a sheet disposed so as to compensate for a hollow caused by variations in the thickness of the electrodes bodies 2 to **4.**

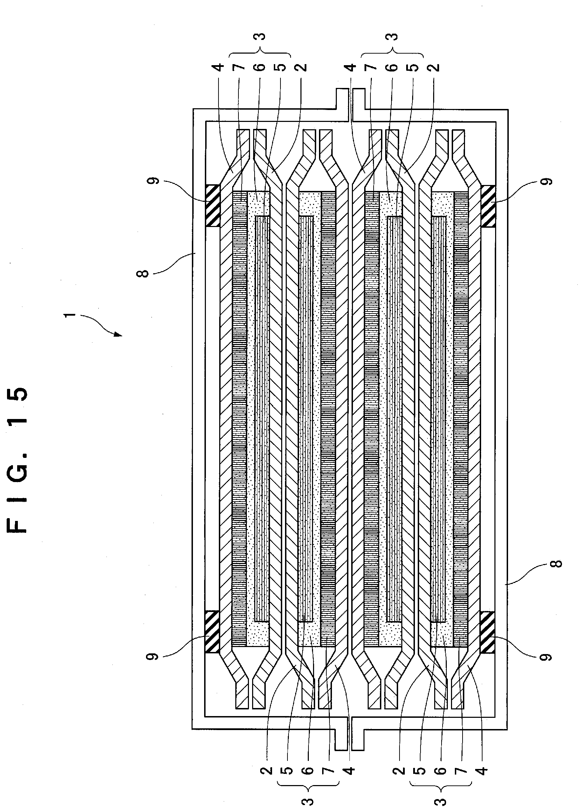

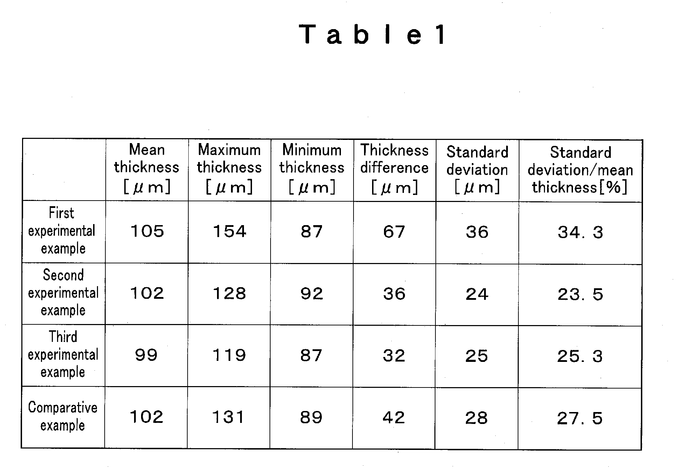

In the example of FIG. 15, the all-solid secondary battery 1 schematically includes the electrodes bodies 2 to 4 that are stacked and sealed into the outer package 8. The current collectors 2 and 4 of the adjacent electrodes bodies 2 to 4 have the same polarity and the hydrogen sulfide absorbents 9 are respectively disposed between the uppermost current collector 2 or 4 and the outer package 8 and between the lowermost current collector 2 or 4 and the outer package 8. Since extra spaces are respectively provided between the uppermost current collector 2 or 4 and the outer package 8 and between the lowermost current collector 2 or 4 and the outer package 8, the hydrogen sulfide absorbents 9 are disposed using the spaces in FIG. 15. If a pressure is applied from the outside of the outer package 8 after the stacked electrodes bodies 2 to 4 are sealed into the outer package 8, the hydrogen sulfide absorbent 9 may be square in plan view in FIG. 15 or may be disposed so as to compensate for a hollow caused by variations in the thickness of the electrodes bodies 2 to 4.

The all-solid secondary battery 1 in FIGS. 13 to 15 are merely exemplary and thus may include another current collector. The hydrogen sulfide absorbent 9 is not always necessary, the ends of the powder films of the powder laminate 3 may be aligned, or stacked and connected electrodes may be sealed into the outer package 8.

The all-solid secondary battery 1 that does not require pressurization when being used will be described below.

### [Second specific example of the all-solid secondary battery 1]

The all-solid secondary battery 1 does not need charge and discharge during discharge and charge. The all-solid secondary battery 1 is required to satisfy requirements (1) and (2) and preferably satisfies requirement (3) and/or requirement (4):
(1) Roughening on the surface of the positive layer 5 and/or the surface of the negative layer 7
(2) Pressurizing charge/discharge with the positive layer 5 and/or the negative layer 7 in contact with the positive current collector 2 and/or the negative current collector 4
(3) Transfer of roughness on the positive current collector 2 and/or the negative current collector 4 to the surface of the positive layer 5 and/or the negative layer 7 by pressurizing the positive current collector 2 and/or the negative current collector 4 during pressure molding on the positive layer 5 and/or the negative layer 7 with the roughened surfaces of the positive current collector 2 and/or the negative current collector 4
(4) Surface roughness of Rz = 0.5 µm to 10.0 µm, preferably Rz = 1.0 µm to 5.0 µm on the surface of the positive layer 5 and/or the surface of the negative layer 7

The first and second embodiments are merely exemplary and are not restrictive in all the aspects. The scope of the present invention is not indicated by the foregoing description but the claims.

## Claims

1. An installation (100) for manufacturing an all-solid secondary battery (1) provided with a dry powder laminate (3) including stacked powder films,
the installation (100) comprising:
a mixer (10) for mixing multiple kinds of dry powder materials (A, S);
a conveying device (20) for conveying the dry powder materials (A, S) mixed by the mixer (10);
an electrostatic film-forming device (30) for forming the powder films in a dry process from the dry powder materials conveyed by the conveying device (20), by using at least an electrostatic force;
a pressure device (50) for pressurizing the dry powder films formed by the electrostatic film-forming device (30); and
a cutting-removing device (70) for cutting and removing an outer end portion of the dry powder films pressurized by the pressure device (50).

2. The installation (100) for manufacturing the all-solid secondary battery (1) according to claim 1, wherein targets to be pressurized by the pressure device (50) are the powder films formed by the electrostatic film-forming device (30) and current collectors (2, 4) on which the powder films are placed,
the current collectors (2, 4) have at least rough surfaces on which the powder films are placed, and
the installation (100) further includes a pressurizing charger/discharger for charging and discharging an electrodes body (2, 3, 4) having the powder laminate (3) interposed between the two current collectors (2, 4) while applying a pressure to the electrodes body (2, 3, 4).

3. The installation (100) for manufacturing the all-solid secondary battery (1) according to claim 1, wherein the cutting-removing device (70) forms the powder laminate (3) by cutting and removing the outer end portion of the stacked powder films, and
the powder laminate (3) to be formed is cut by the cutting-removing device (70) such that an interface between the negative/positive layer (7, 5) and the solid-electrolyte layer (6) has a larger area than an interface between the positive/negative layer (5, 7) and the solid-electrolyte layer (6), and the powder laminate (3) has a side inclined as a cut surface.

4. The installation (100) for manufacturing the all-solid secondary battery (1) according to claim 1 or 3, wherein the cutting-removing device (70) cuts the powder films while stiffness inside a cutting position of the powder films is higher than stiffness outside the cutting position.

5. The installation (100) for manufacturing the all-solid secondary battery (1) according to claim 1 or 3, wherein the cutting-removing device (70) includes a die (71) for holding the powder films and a punch (75) for stamping the powder films held by the die (71) at a speed of at most 100 mm/sec,
the die (71) has a flank surface (74e) on an inner wall (74) where the punch (75) is inserted, and
the die (71) holds the powder films so as to accept deformation of the powder films stamped by the punch (75).

6. Method for manufacturing an all-solid secondary battery (1) provided with a powder laminate (3) including stacked powder films,
the method comprising the steps of:
by means of a mixer (10), mixing multiple kinds of dry powder materials (A, S);
by means of a conveying device (20), conveying the dry powder materials (A, S) mixed by the mixer (10); and
by means of an electrostatic film-forming device (30), forming the powder films in a dry process from the dry powder materials (A, S) conveyed by the conveying device (20), by using at least an electrostatic force;
by means of a pressure device (50), pressurizing the dry powder films formed by the electrostatic film-forming device (30); and
by means of a cutting-removing device (70), cutting and removing an outer end portion of the dry powder films pressurized by the pressure device (50).

7. Method according to claim 6,
wherein targets to be pressurized by the pressure device (50) are the powder films formed by the electrostatic film-forming device (30) and current collectors (2, 4) on which the powder films are placed, and
the current collectors (2, 4) have at least rough surfaces on which the powder films are placed,
wherein the method further comprises the step of, by means of a pressurizing charger/discharger, charging and discharging an electrodes body (2, 3, 4) having the powder laminate (3) interposed between the two current collectors (2, 4) while applying a pressure to the electrodes body (2, 3, 4).

8. Method according to claim 6, further comprising the step of, by means of the cutting-removing device (70), forming the powder laminate (3) by cutting and removing the outer end portion of the stacked powder films, and
by means of the cutting-removing device (70), cutting the powder laminate (3) to be formed such that an interface between the negative/positive layer (7, 5) and the solid-electrolyte layer (6) has a larger area than an interface between the positive/negative layer (5, 7) and the solid-electrolyte layer (6), and the powder laminate (3) has a side inclined as a cut surface.

9. Method according to claim 6 or 8, further comprising the step of, by means of the cutting-removing device (70), cutting the powder films while stiffness inside a cutting position of the powder films is higher than stiffness outside the cutting position.

10. Method according to claim 6 or 8, wherein the cutting-removing device (70) includes a die (71) for holding the powder films and a punch (75) for stamping the powder films held by the die (71) at a speed of at most 100 mm/sec, and
the die (71) has a flank surface (74e) on an inner wall (74) where the punch (75) is inserted,
wherein the method further comprises the step of, by means of the die (71), holding the powder films so as to accept deformation of the powder films stamped by the punch (75).

## Patentansprüche

1. Anlage (100) zum Herstellen einer Festkörper-Sekundärbatterie (1), die mit einem Trockenpulverlaminat (3) versehen ist, das gestapelte Pulverfilme enthält,
wobei die Anlage (100) umfasst:
einen Mischer (10) zum Mischen mehrerer Arten von Trockenpulvermaterialien (A, S);
eine Fördervorrichtung (20) zum Fördern der durch den Mischer (10) gemischten Trockenpulvermaterialien (A, S);
eine elektrostatische Filmbildungsvorrichtung (30) zum Bilden der Pulverfilme in einem Trockenprozess aus den durch die Fördervorrichtung (20) geförderten Trockenpulvermaterialien durch Verwenden mindestens einer elektrostatischen Kraft;
eine Druckvorrichtung (50) zum Druckbeaufschlagen der durch die elektrostatische Filmbildungsvorrichtung (30) gebildeten Trockenpulverfilme; und
eine Schneid-Entfernungsvorrichtung (70) zum Schneiden und Entfernen eines äußeren Endabschnitts der durch die Druckvorrichtung (50) druckbeaufschlagten Trockenpulverfilme.

2. Anlage (100) zum Herstellen der Festkörper-Sekundärbatterie (1) nach Anspruch 1, wobei durch die Druckvorrichtung (50) mit Druck zu beaufschlagende Ziele die durch die elektrostatische Filmbildungsvorrichtung (30) gebildeten Pulverfilme und Stromabnehmer (2, 4) sind, auf denen die Pulverfilme platziert sind,
die Stromabnehmer (2, 4) wenigstens raue Oberflächen aufweisen, auf denen die Pulverfilme platziert sind, und
die Anlage (100) ferner einen Druckbeaufschlagungslader/- entlader zum Laden und Entladen eines Elektrodenkörpers (2, 3, 4) enthält, bei dem das Pulverlaminat (3) zwischen den zwei Stromabnehmern (2, 4) angeordnet ist, während ein Druck auf den Elektrodenkörper (2, 3, 4) ausgeübt wird.

3. Anlage (100) zum Herstellen der Festkörper-Sekundärbatterie (1) nach Anspruch 1, wobei die Schneid-Entfernungsvorrichtung (70) das Pulverlaminat (3) durch Schneiden und Entfernen des äußeren Endabschnitts der gestapelten Pulverfilme bildet, und
das zu bildende Pulverlaminat (3) durch die Schneid-Entfernungsvorrichtung (70) so geschnitten wird, dass eine Schnittstelle zwischen der negativen/positiven Schicht (7, 5) und der Festkörperelektrolytschicht (6) eine größere Fläche als eine Schnittstelle zwischen der positiven/negativen Schicht (5, 7) und der Festkörperelektrolytschicht (6) aufweist, und das Pulverlaminat (3) eine geneigte Seite als Schnittoberfläche aufweist.

4. Anlage (100) zum Herstellen der Festkörper-Sekundärbatterie (1) nach Anspruch 1 oder 3, wobei die Schneid-Entfernungsvorrichtung (70) die Pulverfilme schneidet, während die Steifigkeit innerhalb einer Schneidposition der Pulverfilme höher als die Steifigkeit außerhalb der Schneidposition ist.

5. Anlage (100) zum Herstellen der Festkörper-Sekundärbatterie (1) nach Anspruch 1 oder 3, wobei die Schneid-Entfernungsvorrichtung (70) eine Matrize (71) zum Halten der Pulverfilme und einen Stempel (75) zum Stanzen der durch die Matrize (71) gehaltenen Pulverfilme mit einer Geschwindigkeit von höchstens 100 mm/s enthält,
die Matrize (71) eine Flankenoberfläche (74e) an einer Innenwand (74) aufweist, wo der Stempel (75) eingesetzt ist, und
die Matrize (71) die Pulverfilme hält, um eine Verformung der durch den Stempel (75) gestanzten Pulverfilme zu akzeptieren.

6. Verfahren zum Herstellen einer Festkörper-Sekundärbatterie (1), die mit einem Pulverlaminat (3) versehen ist, das gestapelte Pulverfilme enthält,
wobei das Verfahren die folgenden Schritte umfasst:
Mischen mehrerer Arten von Trockenpulvermaterialien (A, S) mittels eines Mischers (10);
Fördern der durch den Mischer (10) gemischten Trockenpulvermaterialien (A, S) mittels einer Fördervorrichtung (20); und
Bilden der Pulverfilme in einem Trockenprozess aus den durch die Fördervorrichtung (20) geförderten Trockenpulvermaterialien (A, S) mittels einer elektrostatischen Filmbildungsvorrichtung (30) durch Verwenden mindestens einer elektrostatischen Kraft;
Druckbeaufschlagen der durch die elektrostatische Filmbildungsvorrichtung (30) gebildeten Trockenpulverfilme mittels einer Druckvorrichtung (50); und
Schneiden und Entfernen eines äußeren Endabschnitts der durch die Druckvorrichtung (50) druckbeaufschlagten Trockenpulverfilme mittels einer Schneid-Entfernungsvorrichtung (70).

7. Verfahren nach Anspruch 6,
wobei durch die Druckvorrichtung (50) mit Druck zu beaufschlagende Ziele die durch die elektrostatische Filmbildungsvorrichtung (30) gebildeten Pulverfilme und Stromabnehmer (2, 4) sind, auf denen die Pulverfilme platziert sind, und
die Stromabnehmer (2, 4) wenigstens raue Oberflächen aufweisen, auf denen die Pulverfilme platziert sind,
wobei das Verfahren ferner den Schritt des Ladens und Entladens eines Elektrodenkörpers (2, 3, 4), bei dem das Pulverlaminat (3) zwischen den zwei Stromabnehmern (2, 4) angeordnet ist, mittels eines Druckbeaufschlagungsladers/- entladers umfasst, während ein Druck auf den Elektrodenkörper (2, 3, 4) ausgeübt wird.

8. Verfahren nach Anspruch 6, ferner umfassend den Schritt des Bildens des Pulverlaminats (3) mittels der Schneid-Entfernungsvorrichtung (70) durch Schneiden und Entfernen des äußeren Endabschnitts der gestapelten Pulverfilme, und
Schneiden des zu bildenden Pulverlaminats (3) mittels der Schneid-Entfernungsvorrichtung (70), so dass eine Schnittstelle zwischen der negativen/positiven Schicht (7, 5) und der Festkörperelektrolytschicht (6) eine größere Fläche als eine Schnittstelle zwischen der positiven/negativen Schicht (5, 7) und der Festkörperelektrolytschicht (6) aufweist, und das Pulverlaminat (3) eine geneigte Seite als Schnittoberfläche aufweist.

9. Verfahren nach Anspruch 6 oder 8, ferner umfassend den Schritt des Schneidens der Pulverfilme mittels der Schneid-Entfernungsvorrichtung (70), während die Steifigkeit innerhalb einer Schneidposition der Pulverfilme höher als die Steifigkeit außerhalb der Schneidposition ist.

10. Verfahren nach Anspruch 6 oder 8, wobei die Schneid-Entfernungsvorrichtung (70) eine Matrize (71) zum Halten der Pulverfilme und einen Stempel (75) zum Stanzen der durch die Matrize (71) gehaltenen Pulverfilme mit einer Geschwindigkeit von höchstens 100 mm/s enthält, und
die Matrize (71) eine Flankenoberfläche (74e) an einer Innenwand (74) aufweist, wo der Stempel (75) eingesetzt ist,
wobei das Verfahren ferner den Schritt des Haltens der Pulverfilme mittels der Matrize (71) umfasst, um eine Verformung der durch den Stempel (75) gestanzten Pulverfilme zu akzeptieren.

## Revendications

1. Installation (100) pour fabriquer une batterie secondaire entièrement solide (1) pourvue d'un stratifié de poudre sèche (3) comprenant des films de poudre empilés,
l'installation (100) comprenant :
un mélangeur (10) pour mélanger de multiples types de matériaux en poudre sèche (A, S) ;
un dispositif de transport (20) pour transporter les matériaux en poudre sèche (A, S) mélangés par le mélangeur (10) ;
un dispositif de formation de film électrostatique (30) pour former les films de poudre dans un processus de séchage à partir des matériaux en poudre sèche transportés par le dispositif de transport (20), en utilisant au moins une force électrostatique ;
un dispositif de pression (50) pour mettre sous pression les films de poudre sèche formés par le dispositif de formation de film électrostatique (30) ; et
un dispositif de découpe-enlèvement (70) pour découper et enlever une partie d'extrémité externe des films de poudre sèche mis sous pression par le dispositif de pression (50).

2. Installation (100) pour fabriquer la batterie secondaire entièrement solide (1) selon la revendication 1, dans laquelle des cibles à mettre sous pression par le dispositif de pression (50) sont les films de poudre formés par le dispositif de formation de film électrostatique (30) et des collecteurs de courant (2, 4) sur lesquels les films de poudre sont placés,
les collecteurs de courant (2, 4) ont au moins des surfaces rugueuses sur lesquelles les films de poudre sont placés, et
l'installation (100) comprend en outre un chargeur/déchargeur de mise sous pression pour charger et décharger un corps d'électrodes (2, 3, 4) ayant le stratifié de poudre (3) interposé entre les deux collecteurs de courant (2, 4) tout en appliquant une pression au corps d'électrodes (2, 3, 4).

3. Installation (100) pour fabriquer la batterie secondaire entièrement solide (1) selon la revendication 1, dans laquelle le dispositif de découpe-enlèvement (70) forme le stratifié de poudre (3) en découpant et en enlevant la partie d'extrémité externe des films de poudre empilés, et
le stratifié de poudre (3) à former est découpé par le dispositif de découpe-enlèvement (70) de sorte qu'une interface entre la couche négative/positive (7, 5) et la couche d'électrolyte solide (6) a une plus grande surface qu'une interface entre la couche positive/négative (5, 7) et la couche d'électrolyte solide (6), et le stratifié de poudre (3) a un côté incliné en tant que surface découpée.

4. Installation (100) pour fabriquer la batterie secondaire entièrement solide (1) selon la revendication 1 ou 3, dans laquelle le dispositif de découpe-enlèvement (70) découpe les films de poudre alors que la rigidité à l'intérieur d'une position de découpe des films de poudre est supérieure à la rigidité à l'extérieur de la position de découpe.

5. Installation (100) pour fabriquer la batterie secondaire entièrement solide (1) selon la revendication 1 ou 3, dans laquelle le dispositif de découpe-enlèvement (70) comprend une matrice (71) pour tenir les films de poudre et un poinçon (75) pour estamper les films de poudre tenus par la matrice (71) à une vitesse d'au plus 100 mm/s,
la matrice (71) a une surface de flanc (74e) sur une paroi intérieure (74) où le poinçon (75) est inséré, et
la matrice (71) tient les films de poudre de manière à accepter la déformation des films de poudre estampés par le poinçon (75).

6. Procédé pour fabriquer une batterie secondaire entièrement solide (1) pourvue d'un stratifié de poudre (3) comprenant des films de poudre empilés,
le procédé comprenant les étapes consistant à :
mélanger, au moyen d'un mélangeur (10), de multiples types de matériaux en poudre sèche (A, S) ;
transporter, au moyen d'un dispositif de transport (20), les matériaux en poudre sèche (A, S) mélangés par le mélangeur (10) ; et
former, au moyen d'un dispositif de formation de film électrostatique (30), les films de poudre dans un processus de séchage à partir des matériaux en poudre sèche (A, S) transportés par le dispositif de transport (20), en utilisant au moins une force électrostatique ;
mettre sous pression, au moyen d'un dispositif de pression (50), les films de poudre sèche formés par le dispositif de formation de film électrostatique (30) ; et
découper et enlever, au moyen d'un dispositif de découpe-enlèvement (70), une partie d'extrémité externe des films de poudre sèche mis sous pression par le dispositif de pression (50).

7. Procédé selon la revendication 6,
dans lequel des cibles à mettre sous pression par le dispositif de pression (50) sont les films de poudre formés par le dispositif de formation de film électrostatique (30) et des collecteurs de courant (2, 4) sur lesquels les films de poudre sont placés, et
les collecteurs de courant (2, 4) ont au moins des surfaces rugueuses sur lesquelles les films de poudre sont placés,
dans lequel le procédé comprend en outre l'étape consistant à charger et décharger, au moyen d'un chargeur/déchargeur de mise sous pression, un corps d'électrodes (2, 3, 4) ayant le stratifié de poudre (3) interposé entre les deux collecteurs de courant (2, 4) tout en appliquant une pression au corps d'électrodes (2, 3, 4).

8. Procédé selon la revendication 6, comprenant en outre l'étape consistant à former, au moyen du dispositif de découpe-enlèvement (70), le stratifié de poudre (3) en découpant et en enlevant la partie d'extrémité externe des films de poudre empilés, et
découper, au moyen du dispositif de découpe-enlèvement (70), le stratifié de poudre (3) à former de sorte qu'une interface entre la couche négative/positive (7, 5) et la couche d'électrolyte solide (6) a une plus grande surface qu'une interface entre la couche positive/négative (5, 7) et la couche d'électrolyte solide (6), et le stratifié de poudre (3) a un côté incliné en tant que surface découpée.

9. Procédé selon la revendication 6 ou 8, comprenant en outre l'étape consistant à découper, au moyen du dispositif de découpe-enlèvement (70), les films de poudre alors que la rigidité à l'intérieur d'une position de découpe des films de poudre est supérieure à la rigidité à l'extérieur de la position de découpe.

10. Procédé selon la revendication 6 ou 8, dans lequel le dispositif de découpe-enlèvement (70) comprend une matrice (71) pour tenir les films de poudre et un poinçon (75) pour estamper les films de poudre tenus par la matrice (71) à une vitesse d'au plus 100 mm/s, et
la matrice (71) a une surface de flanc (74e) sur une paroi intérieure (74) où le poinçon (75) est inséré,
dans lequel le procédé comprend en outre l'étape consistant à tenir, au moyen de la matrice (71), les films de poudre de manière à accepter la déformation des films de poudre estampés par le poinçon (75).
